# EUROPEAN PATENT APPLICATION

(11) **EP 4 422 329 A1**
(43) Date of publication of application: **28.08.2024**
(21) Application number: 22883307.5
(22) Date of filing: 28.09.2022
(51) Int. Cl.: H04W 74/08, H04W 48/16, H04W 72/02

(54) **RADIO TERMINAL AND METHOD THEREOF**

(30) Priority: 20.10.2021 JP 2021171921
(71) Applicant: NEC Corporation, 108-8001 Tokyo (JP)
(72) Inventor: FUTAKI Hisashi, Tokyo 108-8001 (JP)
(74) Representative: MacDougall, Alan John Shaw
(86) International application number: PCT/JP2022/036160
(87) International publication number: WO 2023/067999

(57) **Abstract**

A NAS layer (202) of a radio terminal (1) passes information about a first feature to an AS layer (208). The AS layer (208) determines a feature combination including the first feature derived from the information and one or more other features. The AS layer (208) selects a random access resource from a first set of random access resources associated with the determined feature combination. The AS layer (208) performs a random access preamble transmission on the selected random access resource. This may contribute, for example, to providing interaction between the Non-Access Stratum (NAS) layer and the Access Stratum (AS) layer for the determination of a feature combination.

## Description

### Technical Field

The present disclosure relates to radio communication networks, and in particular to random access and cell (re)selection.

### Background Art

The 3rd Generation Partnership Project (3GPP (registered trademark)) Radio Access Network (RAN) Working Group is currently considering support for additional random access resource partitioning. This functionality will be introduced in 3GPP Release 17 (see, for example, Non-Patent Literature 1-4). Random Access Resource Partitioning partitions the random access resources used for random access preamble transmission. Random Access Resource Partitioning allows a radio terminal (e.g., User Equipment (UE)) to provide information to a radio access network node (e.g., gNB, eNB) by means of the resources used in the random access preamble transmission.

In this specification, random access resources refer to random access preambles, or combinations of random access occasions and random access preambles. Random access resource partitioning is also referred to as Random Access Channel (RACH) resource partitioning or RACH partitioning. Random access occasions are also referred to as RACH occasions (ROs) and random access preambles are also referred to as RACH preambles. A RACH occasion is the time and frequency resources for a RACH preamble transmission. According to the current 3GPP Release 15 and Release 16 specifications, there are up to 64 RACH preambles in a RACH occasion that can be used for transmission.

With 3GPP Release 16 RACH partitioning, the UE can inform the gNB of the following information, depending on which RACH preamble is used:
- Selected Synchronization Signal (SS)/Physical Broadcast Channel (PBCH) block (SSB) (or selected beam);
- Contention-Free Random Access (CFRA) or Contention-Based RA (CBRA) cause;
- Payload size (preamble group B configured or not);
- Random access type (2-step or 4-step RA).

Additional RACH partitioning is being considered for some Release 17 features to allow the network to identify the features early. These features include, for example, Reduced Capability (RedCap), Small Data Transmission (SDT), Coverage Enhancement (CE or CovEnh), and Slicing. All of the RACH resource partitions that result from possible feature combinations or combinations of features need to be configured. For example, possible feature combinations include RedCap + SDT, RedCap + CovEnh, RedCap + Slicing, RedCap + SDT + CovEnh, RedCap + SDT + Slicing, RedCap + CovEnh + Slicing, and so on. A feature can be called a functional feature.

The RedCap indication in RACH is used to indicate reduced capabilities to the network in the first RACH message (MSG1 in 4-step RA, MSGA in 2-step RA), allowing the network to adapt subsequent transmissions.

The SDT indication in RACH is used to indicate SDT to the network and to request a larger third RACH message (MSG3) size. Alternatively, the SDT indication is used to indicate a larger MSGA size (i.e., the size of the data portion of the MSGA) in the case of a 2-step RA.

The CovEnh indication in RACH is used to indicate the need for coverage enhancement, for example, to request a repetition of the third RACH message (MSG3 in 4-step RA). The CovEnh indication can be binary information to indicate whether a Msg3 PUSCH repetition is required or not.

The slicing indication in RACH is used to indicate a higher-priority slice to the network and to achieve slice isolation even for RACH. The slicing indication can be binary information to distinguish between prioritized and non-prioritized network slices. Alternatively, the slicing indication may indicate a multi-level slice priority, a selected or intended network slice, or a selected or intended network slice group, which would further increase the number of partitions.

In addition, the 3GPP RAN Working Group is considering enhancements to cell selection and reselection for slicing. This functionality will also be introduced in 3GPP Release 17 (see, for example, Non-Patent Literature 5-8). This feature is also referred to as slice-based (or slice-group-based) cell (re)selection. It allows the Access Stratum (AS) layer of the UE to preferentially select or reselect cells that support the intended network slice (or network slice group). The intended network slice (or network slice group) is indicated to the AS layer of the UE by the Non-Access Stratum (NAS) layer of the UE.

### Citation List

### Non Patent Literature

[Non-Patent Literature 1] ZTE Corporation, "RRC and MAC related aspects of common RACH configuration", R2-2107484, 3GPP TSG-RAN WG2 #115-e, Electronic meeting, August 16 - 27, 2021
[Non-Patent Literature 2] NEC, "General aspects of RACH indication and partitioning", R2-2108138, 3GPP TSG-RAN WG2 #115-e, Electronic meeting, August 16 - 27, 2021
[Non-Patent Literature 3] Ericsson, "RACH partitioning for Rel-17 features", R2-2108253, 3GPP TSG-RAN WG2 #115-e, Electronic meeting, August 16 - 27, 2021
[Non-Patent Literature 4] InterDigital, "Report for Rel-17 Small data and URLLC/IIoT", R2-2108834, 3GPP TSG-RAN WG2 #115-e, Electronic meeting, August 16 - 27, 2021
[Non-Patent Literature 5] 3GPP TR 38.832 V17.0.0 (2021-06) "3rd Generation Partnership Project; Technical Specification Group RAN; NR; Study on enhancement of Radio Access Network (RAN) slicing (Release 17)", June 2021
[Non-Patent Literature 6] Intel Corporation, "Frequency prioritization for slice specific cell (re)selection", R2-2104873, 3GPP TSG RAN WG2 #114-e, Electronic meeting, May 19 - 27, 2021
[Non-Patent Literature 7] CMCC, "Discussion on slice based cell reselection", R2-2106224, 3GPP TSG RAN WG2 #114-e, Electronic meeting, May 19 - 27, 2021
[Non-Patent Literature 8] Nokia, "Report on LTE legacy, Mobility, DCCA, Multi-SIM and RAN slicing", R2-2106471, 3GPP TSG RAN WG2 #114-e, Electronic meeting, May 19 - 27, 2021

### Summary of Invention

### Technical Problem

The inventor has studied the random access resource partitioning for Release 17 features and feature combinations and found various problems.

One of these problems concerns the interaction between the NAS layer of the UE and the AS layer of the UE in the selection of feature combinations. For example, as mentioned above, the new Release 17 features that are currently being considered for additional RACH partitioning include "Slicing". Whether or not a slicing indication is required in the RACH is considered to depend on the network slice (or slice group) intended by the NAS layer of the UE. On the other hand, the selection of RACH resources based on feature combinations is done by the AS layer of the UE. In such a case, it is not clear how the interaction between the NAS layer of the UE and the AS layer of the UE is performed for determining a feature combination or selecting RACH resources according to the feature combination.

Another one of these problems concerns cell selection or reselection, or both. According to the inventor's considerations, it may be desirable for the UE, in cell selection and cell reselection, to preferentially select a cell that supports random access based on Release 17 features or feature combinations. Random access based on Release 17 features or feature combinations allows the UE to provide the network with an early indication of the Release 17 features or feature combinations via the random access resources used for preamble transmission. However, there is currently no discussion of considering (or preferring) the availability of random access based on features or feature combinations for cell selection or reselection.

One of the objects to be attained by example embodiments disclosed herein is to provide apparatuses, methods, and programs that contribute to solving at least one of a plurality of problems related to random access resource partitioning, including the problems described above. It should be noted that this object is merely one of the objects to be attained by the example embodiments disclosed herein. Other objects or problems and novel features will be made apparent from the following description and the accompanying drawings.

### Solution to Problem

In a first aspect, a radio terminal includes at least one memory and at least one processor coupled to the at least one memory. The at least one processor is configured to provide NAS layer functionality and AS layer functionality. The NAS layer functionality is configured to pass information about a first feature to the AS layer functionality. The AS layer functionality is configured to determine a feature combination, including the first feature derived from the information and one or more other features. The AS layer functionality is configured to select a random access resource from a first set of random access resources associated with the feature combination determined by the AS layer functionality. The AS layer functionality is configured to perform a random access preamble transmission with the selected random access resource.

In a second aspect, a method performed by a radio terminal includes the steps of:
(a) providing NAS layer functionality and AS layer functionality;
(b) passing, by the NAS layer functionality, information about a first feature to the AS layer functionality;
(c) determining, by the AS layer functionality, a feature combination, the feature combination including the first feature derived from the information and one or more other features;
(d) selecting, by the AS layer functionality, a random access resource from a first set of random access resources associated with the feature combination determined by the AS layer functionality; and
(e) performing, by the AS layer functionality, a random access preamble transmission with the selected random access resource.

In a third aspect, a radio terminal includes at least one memory and at least one processor coupled to the at least one memory. The at least one processor is configured to provide NAS layer functionality and AS layer functionality. The NAS layer functionality is configured to pass information indicating a feature combination to the AS layer functionality. The AS layer functionality is configured to select a random access resource from a first set of random access resources associated with the feature combination indicated by the NAS layer functionality. The AS layer functionality is configured to perform a random access preamble transmission with the selected random access resource.

In a fourth aspect, a method performed by a radio terminal includes the steps of:
(a) providing NAS layer functionality and AS layer functionality;
(b) passing, by the NAS layer functionality, information indicating a feature combination to the AS layer functionality;
(c) selecting, by the AS layer functionality, a random access resource from a first set of random access resources associated with the feature combination indicated by the NAS layer functionality; and (d) performing, by the AS layer functionality, a random access preamble transmission with the selected random access resource.

In a fifth aspect, a radio terminal includes at least one memory and at least one processor coupled to the at least one memory. The at least one processor is configured to, in selecting or reselecting a cell to camp on from one or more candidate cells, consider whether a candidate cell provides a separate set of random access resources for a selected, desired, or intended feature or feature combination.

In a sixth aspect, a method performed by a radio terminal includes, in selecting or reselecting a cell to camp on from one or more candidate cells, considering whether a candidate cell provides a separate set of random access resources for a selected, desired, or intended feature or feature combination.

A seventh aspect is directed to a program. The program includes a set of instructions (software codes) that, when loaded into a computer, cause the computer to perform the method described in the second, fourth, or sixth aspect.

### Advantageous Effects of Invention

According to the aspects described above, it is possible to provide apparatuses, methods and programs that contribute to solving at least one of a plurality of problems related to random access resource partitioning.

### Brief Description of Drawings

Fig. 1 shows an example configuration of a radio communication system according to an example embodiment;
Fig. 2 shows an example of a control plane protocol stack of a radio terminal according to an example embodiment;
Fig. 3 is a flowchart showing an example of the operation of a radio terminal according to an example embodiment;
Fig. 4 is a sequence diagram showing an example of the operation of a radio terminal according to an example embodiment;
Fig. 5 is a flowchart showing an example of the operation of a radio terminal according to an example embodiment;
Fig. 6 is a sequence diagram showing an example of the operation of a radio terminal according to an example embodiment;
Fig. 7 is a flowchart showing an example of the operation of a radio terminal according to an example embodiment;
Fig. 8 is a flowchart showing an example of the operation of a radio terminal according to an example embodiment;
Fig. 9 is a flowchart showing an example of the operation of a radio terminal according to an example embodiment;
Fig. 10 is a flowchart showing an example of the operation of a radio terminal according to an example embodiment;
Fig. 11 is a block diagram showing an example configuration of a radio terminal according to an example embodiment; and
Fig. 12 is a block diagram showing an example configuration of a radio access network node according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

The multiple example embodiments described below may be implemented independently or in combination, as appropriate. These example embodiments include novel features different from each other. Accordingly, these example embodiments contribute to attaining objects or solving problems different from one another and contribute to obtaining advantages different from one another.

The example embodiments shown below are described primarily for the 3GPP fifth generation mobile communication system (5G system). However, these example embodiments may be applied to other radio communication systems.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

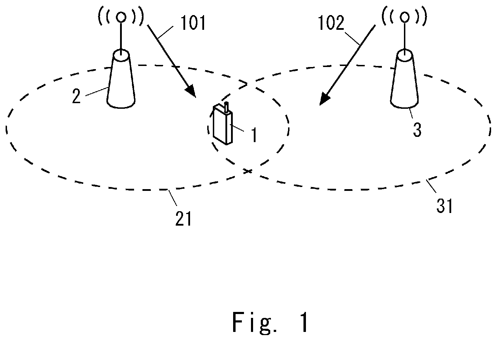

First, the configuration and operation of a plurality of network elements common to a plurality of example embodiments will be described. Fig. 1 illustrates an example of the configuration of a radio communication system related to a plurality of example embodiments. In the example of Fig. 1, the radio communication system includes a radio terminal (i.e., UE) 1, a radio access network (RAN) node (e.g., gNB) 2, and a RAN node 3 (e.g., gNB). Each of the elements (network functions) shown in Fig. 1 can be implemented, for example, as a network element on dedicated hardware, as a software instance running on dedicated hardware, or as a virtualized function instantiated on an application platform.

The UE 1 has at least one radio transceiver and is configured to perform cellular communications with the RAN node 2 or 3 or both. The RAN node 2 is configured to manage a cell 21 and to perform cellular communications with a plurality of UEs, including the UE 1, using a cellular communication technology (e.g., NR Radio Access Technology (RAT)). The RAN node 3 is configured to manage a cell 31 and to perform cellular communications with a plurality of UEs using a cellular communication technology (e.g., NR RAT).

The RAN Node 2 may be a Central Unit (e.g., gNB-CU) in a Cloud RAN (C-RAN) deployment, or a combination of a CU and one or more Distributed Units (e.g., gNB-DUs). Similarly, the RAN node 3 may be a CU or may include a CU and one or more DUs. C-RAN is also referred to as CU/DU split. In addition, a CU may include a Control Plane (CP) unit (e.g., gNB-CU-CP) and one or more User Plane (UP) units (e.g., gNB-CU-UP). Accordingly, each of the RAN nodes 2 and 3 may be a CU-CP or a combination of a CU-CP and a CU-UP. A CU may be a logical node that hosts the Radio Resource Control (RRC), Service Data Adaptation Protocol (SDAP), and Packet Data Convergence Protocol (PDCP) protocols of a gNB (or the RRC and PDCP protocols of a gNB). A DU may be a logical node that hosts the Radio Link Control (RLC), Medium Access Control (MAC), and Physical (PHY) layers of a gNB.

The RAN node 2 transmits signals containing system information (SI) 101 and other signals in the cell 21. The system information 101 includes a Master Information Block (MIB) and a number of System Information Blocks (SIBs). The system information 101 is divided into Minimum SI and Other SI. The Minimum SI is always broadcast periodically and includes basic information required for initial access and information for acquiring any other SI. The Other SI includes all SIBs not broadcast in the Minimum SI. Specifically, the Minimum SI includes MIB and SIB Type 1 (SIB1), and the Other SI includes SIB types from SIB Type 2 (SIB2) and later. Each SIB in the Other SI is either always broadcast periodically, broadcast on demand upon request from UEs in RRC_IDLE or RRC_INACTIVE, or sent to UEs in RRC_CONNECTED via dedicated RRC signaling. Similarly, the RAN node 3 transmits signals containing system information 102 and other signals in the cell 21. If the RAN node 2 or 3 is in a C-RAN deployment, a DU (e.g., gNB-DU) may generate at least part of the system information (e.g., MIB, SIB1). The DU may transmit the generated system information directly to the UE 1 or to the CU (e.g., gNB-CU) to enable the CU to transmit it to the UE 1 (via the DU).

In the example in Fig. 1, the UE 1 has selected or reselected the cell 21 of the RAN node 2 and has camped on to cell 21. In other words, the cell 21 is a serving cell of the UE 1. Meanwhile, the cell 31 is a neighbor (neighbour, neighbouring, adjacent) cell of the serving cell 21 of the UE 1. The cell 21 and the cell 31 may operate in the same frequency band or in different frequency bands.

In addition to the cell 31, one or more other neighbor cells may be present in the vicinity of the cell 21. Some or all of these other neighbor cells may operate in the same frequency band as the cell 21, or they may operate in a different frequency band than the cell 21.

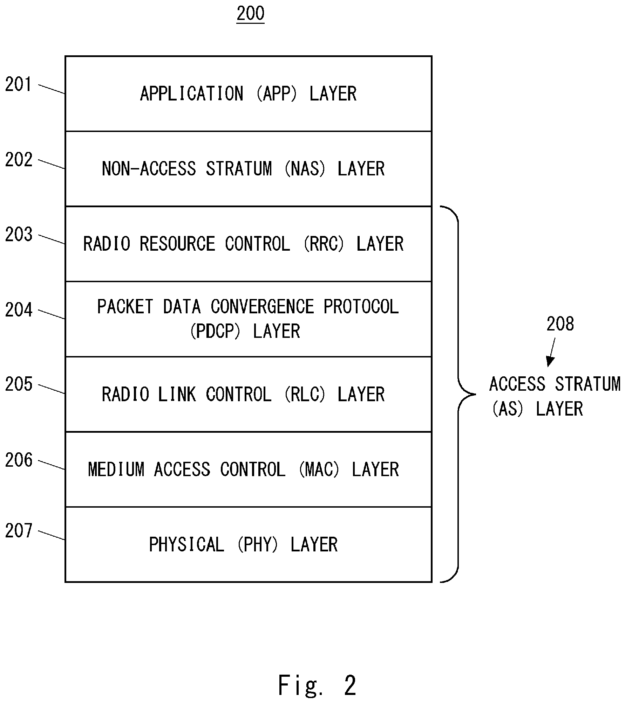

Fig. 2 shows an example of the control plane protocol stack of the UE 1. The control plane protocol stack 200 of the UE 1 includes an Application (APP) layer 201, a Non-Access Stratum (NAS) layer 202, and an Access Stratum (AS) layer 208. The AS layer 208 includes an RRC layer 203, a PDCP layer 204, an RLC layer 205, a MAC layer 206, and a PHY layer 207.

The NAS layer 202 utilizes data communication over a radio interface and management of the radio interface provided by the AS layer 208 and communicates with a core network (i.e., 5G Core (5GC)) via the RAN node 2 according to the 5G System (5GS) Mobility Management (5GMM) protocols and the 5GS Session Management (5 GSM) protocols. The 5GMM protocol runs between the UE 1 and an Access and Mobility Management Function (AMF) within the 5GC and is used for UE registration, mobility, and transport of 5GSM protocol messages. The 5GSM protocol runs between the UE 1 and a Session Management Function (SMF) within the 5GC via the AMF and supports management of PDU Session connectivity.

The NAS layer 202 communicates with the RRC layer 203 to utilize services provided by the AS layer 208 (i.e., data communication over the radio interface between the UE 1 and the RAN node 2 and management of the radio interface). The RRC layer 203 is a lower layer of the NAS layer 202 and provides radio resource control (RRC) and manages the RRC state (i.e., RRC_IDLE, RRC_INACTIVE, and RRC_CONNECTED) of the UE 1.

The AS layer 208 initiates an RRC connection establishment procedure or an RRC connection resume procedure in response to a request from the NAS layer 202 or on a voluntary basis. For example, in response to receiving a PDU Session establishment request from an upper layer (i.e., Application layer 201), if the 5GS mobility management (5GMM) mode is 5GMM-IDLE, the NAS layer 202 initiates a registration procedure or a service request procedure to transition to 5GMM-CONNECTED mode and attempt to transmit an initial NAS message (e.g., a registration request message or a service request message) to the AMF. The initial NAS message from the NAS layer 202 triggers the AS layer 208 to establish an RRC connection between the UE 1 and the RAN node 2. If the 5GMM mode is 5GMM-CONNECTED or 5GMM-CONNECTED with RRC inactive indication, the NAS layer 202 attempts to transmit a NAS message (e.g., PDU SESSION ESTABLISHMENT REQUEST message, UL NAS TRANSPORT message, PDU SESSION MODIFICATION REQUEST, or SERVICE REQUEST message) depending on the event that triggered the access attempt. Alternatively, if the 5GMM mode is 5GMM-CONNECTED or 5GMM-CONNECTED with RRC inactive indication and the access attempt is "an uplink user data packet to be sent for a PDU session with suspended user-plane resources", the NAS layer 202 requests the AS layer 208 to make a transition to RRC_CONNECTED (or resumption of the RRC connection) in order to transmit an uplink user data packet (i.e., Mobile Originated (MO) data).

In response to receiving an initial NAS message or a request for transition to RRC_CONNECTED, the RRC layer 203 requests or triggers the MAC layer 206 to initiate a random access procedure to transmit an RRC message for establishing or resuming the RRC connection. The RRC message for establishing or resuming the RRC connection may be an RRC Setup Request message or an RRC Resume Request message. Prior to this, the RRC layer 203 may perform one or more access barring checks. Subject to passing the access barring checks, the RRC layer 203 may request the MAC layer 206 to initiate a random access procedure. The access barring methods include, for example, Access Class Barring (ACB), Extended Access Barring (EAB), Application specific Congestion control for Data Communication (ACDC), and Unified Access Control (UAC). The RRC layer 203 may perform barring checks for one or more of these access barring methods.

The MAC layer 206 receives a trigger for a random access procedure from the RRC layer 203 based on an event such as the reestablishment and resumption of an RRC connection, and initiates the random access procedure accordingly. The MAC layer 206 may initiate a random access procedure by the MAC layer 206 itself or by a Physical Downlink Control Channel (PDCCH) order.

In a random access procedure, the MAC layer 206 selects a single RACH resource to be used for RACH preamble transmission from a set of partitioned random access resources (RACH resources). The set of RACH resources includes RACH preambles, or combinations of RACH occasions and RACH preambles. A RACH occasion is time and frequency resources for a RACH preamble transmission. According to the current 3GPP Release 15 and Release 16 specifications, there are up to 64 RACH preambles in a RACH occasion that can be used for transmission. The set of RACH resources can also be referred to as a pool or partition of RACH resources.

The MAC layer 206 requests the PHY layer 207 to transmit a random access preamble (RACH preamble) on the selected RACH resource. The random access procedure further includes Random Access Response (RAR) reception and contention resolution.

The MAC layer 206 may follow the RACH partitioning of 3GPP Release 16. With 3GPP Release 16 RACH partitioning, the UE can inform the gNB of the following information, depending on which RACH preamble is used:
- Selected Synchronization Signal (SS)/Physical Broadcast Channel (PBCH) block (SSB) (or selected beam);
- Contention-Free Random Access (CFRA) or Contention-Based RA (CBRA) cause;
- Payload size (preamble group B configured or not);
- Random access type (2-step or 4-step RA).

In addition, the MAC layer 206 supports additional RACH partitioning for Release 17 features. This allows the RAN node 2 to identify at an early stage the Release 17 features or feature combinations selected, desired, or intended by the UE 1. For example, a RACH resource partition is configured for each of all or a subset of the Release 17 features, as well as for each of the possible feature combinations or combinations of features. Each Release 17 feature is, for example, Reduced Capability (RedCap), Small Data Transmission (SDT), Coverage Enhancement (CE or CovEnh), or Slicing. For example, a feature combination includes at least two of RedCap, SDT, CovEnh, or Slicing. The term "feature" as used in the remainder of this specification means any one of these Release 17 features, unless otherwise noted. Similarly, the term "feature combination" means a combination consisting of at least two of these Release 17 features, unless otherwise noted. A "feature combination" may be referred to as a "feature set" or a "set of features.

The RedCap indication in RACH is used to indicate reduced capabilities to the network in the first RACH message (MSG1 in 4-step RA, MSGA in 2-step RA), allowing the network to adapt subsequent transmissions. Note that the 3GPP RAN Working Group is currently considering support for RedCap UEs by New Radio (NR), which will be introduced in 3GPP Release 17. The introduction of RedCap NR devices will enable support for use cases that are not optimally served by the current NR standard. Use cases motivating the NR RedCap standardization effort include wearables (e.g., smart watches, wearable medical devices, Augmented Reality (AR)/Virtual Reality (VR) goggles), industrial wireless sensors, and video surveillance. These use cases have less stringent data rate requirements than the enhanced mobile broadband (eMBB) use case and do not have the tight or deterministic latency requirements of the time-critical communications use case. Thus, there is room to trade off device features for complexity or cost savings compared to Release 15 NR devices as a baseline. According to the currently proposed capabilities of the RedCap devices, the maximum device bandwidth, the minimum number of device receive branches, the maximum number of downlink MIMO layers, and the maximum downlink modulation order may be reduced or relaxed compared to those of the Release 15 NR devices.

The SDT indication in RACH is used to indicate SDT to the network and to request a larger third RACH message (MSG3) size. Alternatively, the SDT indication is used to indicate a larger MSGA size (i.e., the size of the data portion of the MSGA) in the case of a 2-step RA. In addition, two different sizes of MSG3 or MSGA may be possible, as in the RACH in 3GPP Release 15/16. In this case, the SDT indication in the RACH may further indicate the size of the MSG3 or MSGA. The SDT, which is also referred to as the SDT in inactive state, is one of the new features to be introduced in 3GPP Release 17. It allows UEs in RRC_INACTIVE to transmit infrequent and small data without requiring an RRC state transition.

The CovEnh indication in RACH is used to indicate the need for coverage enhancement, for example, to request a repetition of the third RACH message (MSG3 in 4-step RA). The CovEnh indication can be binary information to indicate whether a Msg3 PUSCH repetition is required or not. Alternatively, the CovEnh indication may indicate one of multiple coverage enhancement (CE) levels. The CovEnh indication may indicate one of two or more CE level groups (or CE modes). A CE level group or CE mode includes one or more CE levels. For example, the CE specified in 3GPP Release 14 supports up to four CE levels (i.e., CE levels 0 to 3). The UE determines its CE level on the basis of a measured RSRP level. CE level 0 is associated with the highest RSRP threshold and CE level 3 is associated with the lowest RSRP threshold. In other words, UEs at CE level 0 enjoy relatively low path loss and high downlink received power, while UEs at CE level 3 enjoy relatively high path loss and low downlink received power.

The slicing indication in RACH is used to indicate a higher-priority slice to the network and to achieve slice isolation even for RACH. The slicing indication can be binary information to distinguish between prioritized and non-prioritized network slices. Alternatively, the slicing indication may be information indicating one of three or more multi-level slice priorities. The slicing indication may indicate a network slice or network slice group selected or intended by the UE 1. A network slice group includes one or more network slices.

Network slicing uses Network Function Virtualization (NFV) and software-defined networking (SDN) technologies to create multiple virtualized logical networks on top of physical networks. Each virtualized logical network, called a network slice or network slice instance, contains logical nodes and functions, and is used for specific traffic and signaling. A network slice may be a network slice provided by a core network (e.g., 5GC). Multiple network slices are distinguished, for example, by the services or use cases provided to the UE 1 on the respective network slice. The use cases include, for example, enhanced Mobile Broad Band (eMBB), Ultra-Reliable and Low Latency Communication (URLLC), and massive Machine Type Communication (mMTC). These are referred to as slice types (e.g., Slice/Service Type (SST)). The RAN node 2 may allocate to the UE 1 a RAN slice and a radio slice associated with the network slice of the core network selected for the UE 1, in order to provide end-to-end network slicing to the UE 1. In view of the above, the slicing indication in the RACH may be information about a network slice in the core network, information about a RAN or radio slice, or information about an end-to-end network slice.

A network slice may be specified by Network Slice Selection Assistance Information (NSSAI) or Single NSSAI (S-NSSAI). This is communicated, for example, from the core network (e.g., 5GC) to the NAS layer 202 of the UE 1, and from the NAS layer 202 of the UE 1 to the AS layer 208 (e.g., RRC). A network slice selected and intended by the UE 1 may be referred to as a selected NSSAI and an intended NSSAI, respectively. A selected network slice (selected NSSAI) may be referred to as an allowed NSSAI, meaning a network slice that has been allowed for use by the core network. An SST can be contained in an S-NSSAI (i.e., an S-NSSAI contains information about an SST).

More specifically, each of the network slices selected or intended by the UE 1 may be specified by an identifier known as Single Network Slice Selection Assistance Information (S-NSSAI). A selected or intended network slice(s) may be an S-NSSAI(s) included in a Configured NSSAI, or an S-NSSAI(s) included in an Allowed NSSAI. Note that S-NSSAIs in a Requested NSSAI included in a NAS registration request message should be part of a Configured NSSAI and/or an Allowed NSSAI. Accordingly, an intended network slice(s) may be S-NSSAI(s) included in a Requested NSSAI.

A Configured NSSAI contains one or more S-NSSAIs, each of which is applicable to one or more Public Land Mobile Networks (PLMNs). For example, a Configured NSSAI is configured by a Serving PLMN and applied to that Serving PLMN. An Allowed NSSAI specifies one or more S-NSSAIs that are provided to the UE 1 by a Serving PLMN and can be used by the UE 1 in the current Registration Area of that Serving PLMN. A Configured NSSAI may be a Default Configured NSSAI. A Default Configured NSSAI is configured by the Home PLMN (HPLMN) and applies to any PLMNs for which a specific Configured NSSAI has not been provided. The UE 1 may be preconfigured with a Default Configured NSSAI. The UE 1 may be provisioned or updated with a Default Configured NSSAI as determined by a Unified Data Management (UDM) in the HPLMN. An Allowed NSSAI is determined by an AMF of a Serving PLMN, e.g., during a registration procedure. An Allowed NSSAI is signaled to the UE 1 by the network (i.e., AMF) and stored in a (non-volatile) memory of the AMF and the UE 1, respectively.

The above describes the operations of the AS layer 208 based on NAS initiated access attempts with reference to Fig. 2. Of course, the operations performed by the AS layer 208 are not limited thereto. In one example, the RRC layer 203 performs cell selection and reselection. Specifically, when the RRC state of the UE 1 is RRC_IDLE or RRC_INACTIVE, the RRC layer 203 searches for a suitable cell to camp on according to cell selection criteria or cell reselection criteria. If a suitable cell to camp on is found, the RRC layer 203 camps on that cell. Camping on to a cell means that the UE 1 has completed the cell selection or reselection process and has chosen a cell. In other words, the term "camp on" means that the UE 1 has stayed in a cell and is ready to initiate a potential dedicated service in that cell. In particular, when the UE 1 is in RRC_IDLE or RRC_INACTIVE, a serving cell of the UE 1 can be referred to as a cell on which the UE 1 is camping. A serving cell is sometimes referred to as a camped cell.

In some implementations, the AS layer 208 may determine or select a feature combination. In one example, the RRC layer 203 of the UE 1 may determine or select a feature combination. Specifically, the RRC layer 203 of the UE 1 may determine a feature combination and indicate the determined feature combination to the MAC layer 206 of the UE 1. Alternatively, the final determination or selection of a feature combination may be performed by the MAC layer 206 of the UE 1. Specifically, the RRC layer 203 of the UE 1 may determine one or more features to be included in a feature combination and may indicate the determined one or more features to the MAC layer 206 of the UE 1. The MAC layer 206 may further determine required features and determine the feature combination.

In other implementations, the NAS layer 202 may determine or select a feature combination. The NAS layer 208 may indicate the feature combination to the AS layer 208 (e.g., RRC layer 203).

### First Example Embodiment

The example configuration of a radio communication system in this example embodiment may be similar to the example shown in Fig. 1. The control plane protocol stack of the UE 1 may be similar to the example shown in Fig. 2.

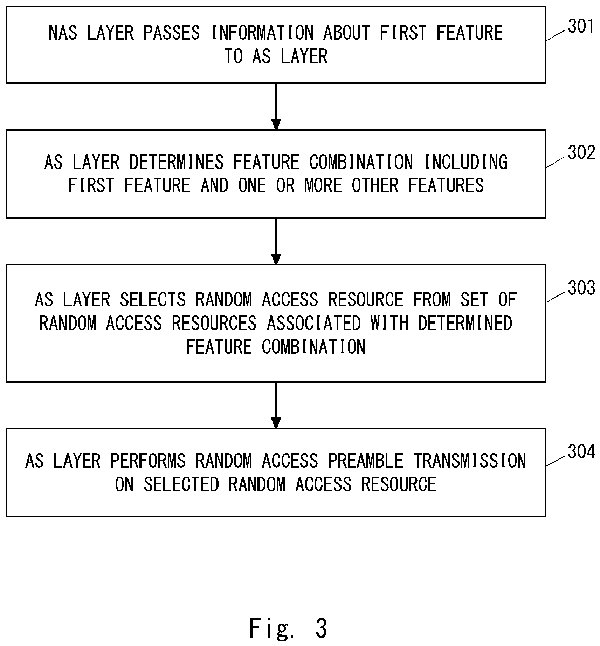

Fig. 3 illustrates an example of the operation of the UE 1 with respect to NAS initiated access attempts. In step 301, the NAS layer 202 passes information about a first feature to the AS layer 208, in particular to the RRC layer 203. For example, the NAS layer 202 may send this information to the RRC layer 203 with a request to transmit a NAS message. The NAS layer 202 may send this information to the RRC layer 203 with a request to transition from RRC_IDLE or RRC_INACTIVE to RRC_CONNECTED.

The first feature may be related to information, state, or functionality managed by the NAS layer 202. The first feature may be related to information, state, or functionality configured in the UE 1 by the core network via NAS signaling. The first feature may be a Release 17 feature, specifically "Slicing". In this case, the information about the first feature may indicate one or more network slices intended by the NAS layer 202. As described above, each of the one or more intended network slices may be specified by an identifier known as S-NSSAI. The intended network slice(s) may be an S-NSSAI(s) included in a Configured NSSAI, or an S-NSSAI(s) included in an Allowed NSSAI. The intended network slice(s) may be an S-NSSAI(s) included in a Requested NSSAI.

Alternatively, the information about the first feature may indicate one or more network slice groups intended by the NAS layer 202. Each of the one or more intended network slice groups may be specified by a slice group identifier (ID). The mapping of each network slice group to one or more network slices may be provided by the core network (e.g., AMF) to the UE 1 (NAS layer 202) via NAS signaling.

Alternatively, the information about the first feature may indicate one or more network slice priority levels. In other words, one or more slice groups may be one or more network slice priority levels. The mapping between each slice priority level and one or more network slices may be provided by the core network (e.g., AMF) to the UE 1 (NAS layer 202) via NAS signaling.

In step 302, the AS layer 208 determines a feature combination including the first feature derived from the information received from the NAS layer 202 and one or more other features. The first feature and one or more other features may be Release 17 features. In particular, the first feature may be slicing, and the one or more other features may include at least one of RedCap, SDT, or CovEnh. In an example, the RRC layer 203 of the UE 1 may determine a feature combination and indicate the determined feature combination to the MAC layer 206 of the UE 1. Alternatively, the RRC layer 203 of the UE 1 may determine one or more features to be included in a feature combination and indicate the determined one or more features to the MAC layer 206 of the UE 1. The MAC layer 206 may further determine required features and determine the feature combination.

In step 303, the AS layer 208 selects a random access resource from a set of random access resources associated with the feature combination determined in step 302. The set of random access resources (or RACH resources) is a separate RACH resource partition associated with the feature combination. Specifically, the RRC layer 203 may indicate to the MAC layer 206 the feature combination determined in step 302. The MAC layer 206 may select a random access resource from the set of random access resources associated with the feature combination indicated by the RRC layer 203. The UE 1 transmits a preamble on the selected random access resource from the resource set (or partition), thereby enabling the RAN node 2 to identify early on the feature combination selected, desired, or intended by the UE 1.

In step 304, the AS layer 208 performs random access preamble transmission on the selected random access resource. Specifically, the MAC layer 206 requests the PHY layer 207 to transmit a preamble on the selected random access resource.

In step 301, the NAS layer 202 may send information about a second feature (e.g., Mobile Terminated (MT) SDT-related information) to the AS layer 208 in addition to the information about the first feature (e.g., slice-related information). In this case, in step 302, the AS layer 208 may determine a feature combination including the first feature, the second feature, and one or more other features, for RACH resource selection.

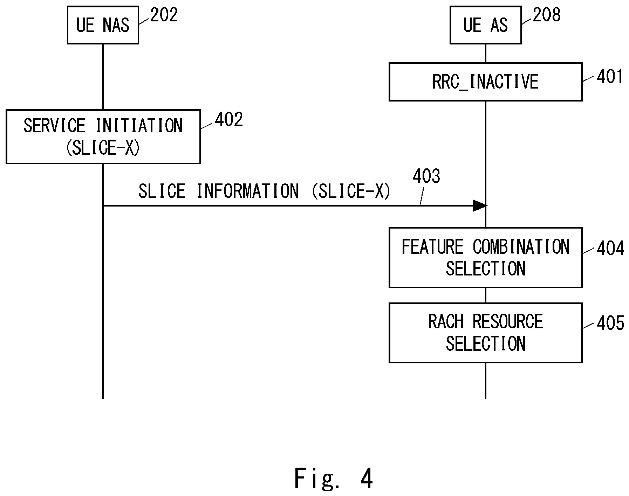

Fig. 4 shows a specific example of the operation of the UE 1 described with reference to Fig. 3. In step 401, the AS layer 208 of the UE 1 is in RRC_INACTIVE. Although not shown in the figure, if the UE 1 receives an RRC Release message from the RAN node 2 containing suspendConfig when the UE 1 is in RRC_CONNECTED, the RRC layer 203 indicates the suspension of the RRC connection to the upper layer (i.e., the NAS layer 202) and enters RRC_INACTIVE. Accordingly, the 5GMM mode of the NAS layer 202 is 5GMM-CONNECTED with RRC inactive indication.

In step 402, the NAS layer 202 is triggered for an access attempt based on an uplink user data packet to be sent for a PDU Session using the suspended user plane resource. The access attempt relates to a particular network slice (e.g., Slice-X). In step 403, in response to the access attempt being triggered, the NAS layer 202 requests the AS layer 208 (RRC layer 203) to transition to RRC_CONNECTED (or resume the RRC connection) to transmit an uplink user data packet (i.e., MO data). The request indicates the particular network slice (e.g., Slice-X) to the RRC layer 203. The NAS layer 202 may also indicate a particular network slice group or a particular network slice priority level to the RRC layer 203. Step 403 corresponds to step 301 in Fig. 3.

Step 404 corresponds to step 302 in Fig. 3. In step 404, the AS layer 208 performs a joint process. Specifically, the RRC layer 203 determines whether the network slice (or slice group) indicated by the NAS layer 202 is a prioritized network slice for RACH preamble transmission. Alternatively, based on the network slice (or slice group, or priority level) indicated by the NAS layer 202, the RRC layer 203 determines whether or not the network slice is a prioritized network slice for RACH preamble transmission. In addition, the RRC layer 203 determines whether to perform SDT. In other words, the RRC layer 203 determines whether to perform SDT or the normal RRC resume procedure. Based on these determinations, the RRC layer 203 determines a feature combination (e.g., SDT+Slicing) and passes it to the MAC layer 206. In step 405, according to the feature combination indicated by the RRC layer 203, the MAC layer 206 determines a RACH resource for RACH preamble transmission from a set (or partition) of RACH resources associated with the feature combination.

According to the operation of the UE 1 described with reference to Fig. 3 or Fig. 4, or both, the AS layer 208 can determine a feature combination including a feature related to the information (or state, or functionality) managed by the NAS layer 202. Thus, an interaction between the NAS layer 202 and the AS layer 208 of the UE 1 can be provided for determining a feature combination.

Note that in step 303 of Fig. 3 or step 405 of Fig. 4, if the set of random access resources associated with the feature combination is not configured (or not available) in the serving cell (i.e., cell 21), the AS layer 208 (RRC layer 203) may inform the NAS layer 202 of a failure without performing a random access preamble transmission. The failure cause sent by the AS layer 208 to the NAS layer 202 may be "other" or a newly defined value. Alternatively, the AS layer 208 may perform any of the fallback actions described in detail in the third or fourth example embodiments below.

### Second Example Embodiment

The example configuration of a radio communication system in this example embodiment may be similar to the example shown in Fig. 1. The control plane protocol stack of the UE 1 may be similar to the example shown in Fig. 2.

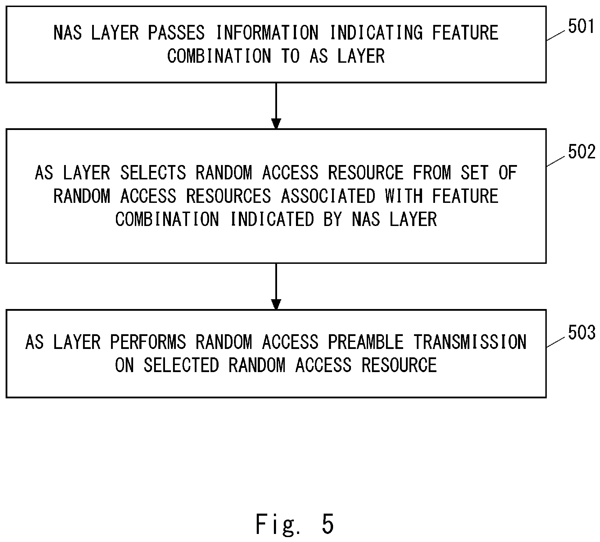

Fig. 5 shows a different solution than that in Fig. 3. In step 501, the NAS layer 202 passes information indicating a feature combination to the AS layer 208, specifically to the RRC layer 203. For example, the NAS layer 202 may send this information to the RRC layer 203 with a request to transmit a NAS message. The NAS layer 202 may send this information to the RRC layer 203 with a request to transition from RRC_IDLE or RRC_INACTIVE to RRC_CONNECTED. The feature combination may be a combination of Release 17 features. In particular, the feature combination may include at least two of RedCap, SDT, CovEnh, or Slicing.

The information indicating the feature combination may indicate one or more network slices intended by the NAS layer 202. Each of the one or more intended network slices may be specified by an S-NSSAI. The intended network slice(s) may be an S-NSSAI(s) included in a Configured NSSAI, or an S-NSSAI(s) included in an Allowed NSSAI. Alternatively, the information indicating the feature combination may indicate one or more network slice groups intended by the NAS layer 202. Each of the one or more intended network slice groups may be specified by a slice group ID. The mapping of each network slice group to one or more network slices may be provided by the core network (e.g., AMF) to the UE 1 (NAS layer 202) via NAS signaling. Alternatively, the information about the first feature may indicate one or more network slice priority levels. The mapping between each slice priority level and one or more network slices may be provided by the core network (e.g., AMF) to the UE 1 (NAS layer 202) via NAS signaling.

In step 502, the AS layer 208 selects a random access resource from a set of random access resources associated with the feature combination indicated by the NAS layer 202. Specifically, the RRC layer 203 may indicate the feature combination to the MAC layer 206. The MAC layer 206 may select a random access resource from the set of random access resources associated with the feature combination indicated by the RRC layer 203. The UE 1 transmits a preamble on the selected random access resource from the resource set (or partition), thereby enabling the RAN node 2 to identify early on the feature combination selected, desired, or intended by the UE 1.

In step 503, the AS layer 208 performs random access preamble transmission on the selected random access resource. Specifically, the MAC layer 206 requests the PHY layer 207 to transmit a preamble on the selected random access resource.

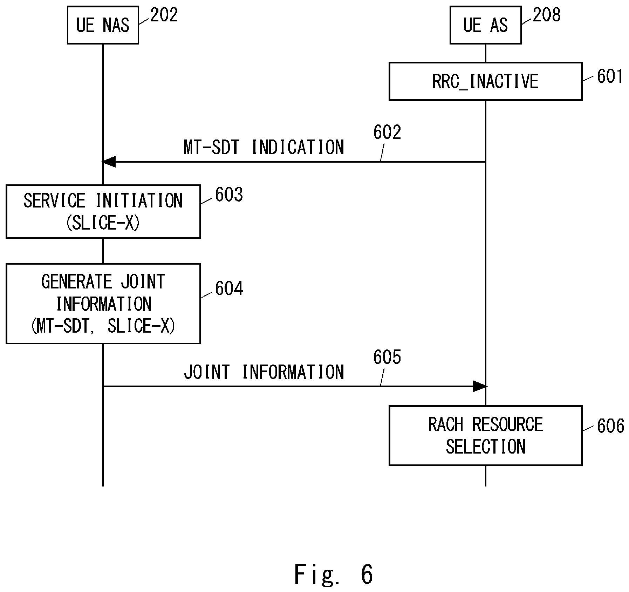

Fig. 6 shows a specific example of the operation of the UE 1 described with reference to Fig. 5. In step 601, the AS layer 208 of the UE 1 is in RRC_INACTIVE. Although not shown in the figure, if the UE 1 receives an RRC Release message from the RAN node 2 containing suspendConfig when the UE 1 is in RRC_CONNECTED, the RRC layer 203 indicates the suspension of the RRC connection to the upper layer (i.e., the NAS layer 202) and enters RRC_INACTIVE. Accordingly, the 5GMM mode of the NAS layer 202 is 5GMM-CONNECTED with RRC inactive indication.

In step 602, the AS layer 208 sends an MT-SDT indication to the NAS layer 202. For example, in response to receiving a paging indicating or relating to MT-SDT from the core network (e.g., AMF) via the RAN node 2, the AS layer 208 may send the MT-SDT indication to the NAS layer 202. Alternatively, in response to receiving a paging from the RAN node 2 (i.e., RAN paging) indicating or relating to MT-SDT, the AS layer 208 may send the MT-SDT indication to the NAS layer 202. The RAN paging may be generated and transmitted by the RAN node 2 to the UE 1 in response to the RAN node 2 receiving data for a suspended DRB (or corresponding QoS flow) from the core network (e.g., UPF). The paging and the RAN paging may include a flag indicating MT-SDT. Additionally or alternatively, the paging and the RAN paging may include information about at least one of a DRB(s), a PDU session(s), a QoS flow(s), or one or more network slices (e.g., S-NSSAI(s)) subject to MT-SDT. Similar information may be included in the MT-SDT indication from the AS layer 208 to the NAS layer 202. Alternatively, the MT-SDT indication may be implicitly indicated by an indication requesting the resumption of a suspended DRB (or corresponding QoS flow).

In step 603, the MT-SDT indication triggers the NAS layer 202 to make an access attempt. The access attempt relates to a particular network slice (e.g., Slice-X). In step 604, in response to the access attempt being triggered, the NAS layer 202 determines a feature combination (e.g., SDT+Slicing). In step 605, the NAS layer 202 sends joint information indicating the feature combination to the AS layer 208. In step 606, the AS layer 208 determines a RACH resource for RACH preamble transmission from a set (or partition) of RACH resources associated with the feature combination indicated by the NAS layer 202. Specifically, the RRC layer 203 indicates the feature combination to the MAC layer 206. The MAC layer 206 determines a RACH resource for RACH preamble transmission from the set (or partition) of RACH resources associated with the feature combination indicated by the RRC layer 203. For example, the joint information indicating the feature combination may be explicit information that MT-SDT is (or should be) performed for a suspended DRB (or QoS flow). Alternatively, the joint information may be implicit information indicating that the RRC connection is to be (or should be) resumed for data transmission on that DRB (or QoS flow).

According to the operation of the UE 1 described with reference to Fig. 5 or Fig. 6, or both, the NAS layer 202 can determine a feature combination, and the AS layer 208 can select a RACH resource associated with the feature combination determined by the NAS layer 202. Thus, an interaction between the NAS layer 202 and the AS layer 208 of the UE 1 can be provided for selecting a RACH resource corresponding to a feature combination.

Note that in step 502 of Fig. 5 or step 606 of Fig. 6, if the set of random access resources associated with the feature combination is not configured (or not available) in the serving cell (i.e., cell 21), the AS layer 208 (RRC layer 203) may inform the NAS layer 202 of a failure without performing a random access preamble transmission. The failure cause sent by the AS layer 208 to the NAS layer 202 may be "other" or a newly defined value. Alternatively, the AS layer 208 may perform any of the fallback actions described in detail in the third or fourth example embodiments below.

### Third Example Embodiment

The example configuration of a radio communication system in this example embodiment may be similar to the example shown in Fig. 1. The control plane protocol stack of the UE 1 may be similar to the example shown in Fig. 2.

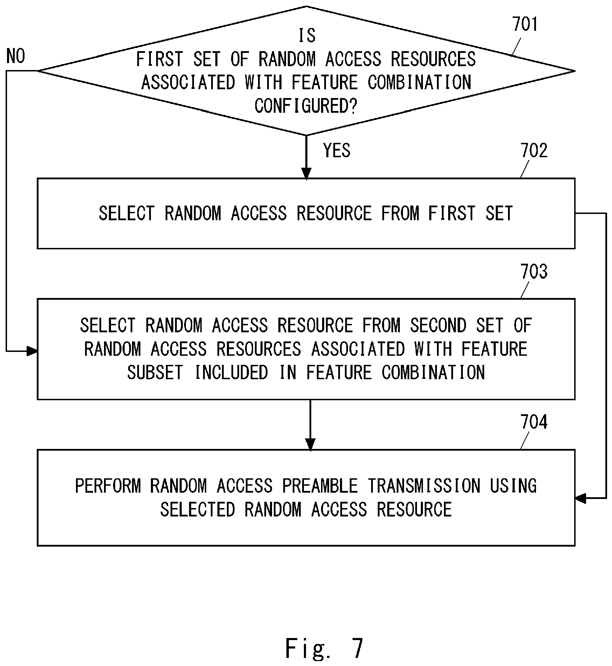

Fig. 7 shows an example of the operation of the UE 1 in a random access procedure. Steps 701-703 relate to random access resource selection. For example, the UE 1 may perform steps 701-703 instead of step 303 in Fig. 3, step 405 in Fig. 4, step 502 in Fig. 5, or step 606 in Fig. 6.

In step 701, the UE 1 (MAC layer 206) determines whether or not a first set of random access resources associated with a feature combination selected, desired, or intended by the UE 1 is configured (or available). The RRC layer 203 may configure the MAC layer 206 with multiple resource sets (or resource partitions), including the first set. The RRC layer 203 receives a random access configuration via broadcast from the RAN node 2, and configures the MAC layer 206 with the multiple resource sets (or resource partitions) indicated in the random access configuration.

Accordingly, if the result of step 701 is YES, it means that the RAN node 2 provides in the cell 21 the random access resource set (or resource partition) associated with the feature combination selected, desired, or intended by the UE 1. In other words, YES in step 701 means that the feature combination selected, desired, or intended by the UE 1 is supported (or available) in the cell 21. Conversely, if the result of step 701 is NO, it means that the RAN node 2 does not provide in the cell 21 the random access resource set (or resource partition) associated with the feature combination selected, desired, or intended by the UE 1. In other words, NO in step 701 means that the feature combination selected, desired, or intended by UE 1 is not supported (or available) in the cell 21.

The UE 1 (MAC layer 206) may select between Normal Uplink (NUL) and Supplementary Uplink (SUL) carriers prior to the random access resource selection. An SUL carrier can be configured as a complement to an NUL carrier. To supplement the coverage of an NUL carrier, an SUL carrier typically uses a lower uplink frequency than the NUL carrier. The UE 1 (MAC layer 206) may select one of the NUL and SUL carriers based on a downlink measurement result. For example, the UE 1 may operate similarly to the selection between NUL and SUL carriers in 3GPP Release 15 and/or Release 16. If the RSRP of the downlink pathloss reference is lower than an RSRP threshold for uplink carrier selection (e.g., rsrp-Threshold S SB -SUL), the UE 1 may select the SUL carrier to perform the random access procedure. Otherwise, the UE 1 may select the NUL carrier to perform the random access procedure.

The network (e.g., RAN node 2) may not necessarily support the same features or the same feature combinations on both the NUL and SUL carriers. Thus, in step 701, the UE 1 (MAC layer 206) may determine whether or not the first set of random access resources associated with the feature combination selected, desired, or intended by the UE 1 is available on the selected uplink carrier. In this case, if the result of step 701 is YES, it means that the feature combination selected, desired, or intended by the UE 1 is supported (or available) on the selected uplink carrier. If the result of step 701 is NO, it means that the feature combination selected, desired, or intended by the UE 1 is not supported (or available) on the selected uplink carrier.

If the result of step 701 is YES, then the UE 1 (MAC layer 206) selects a random access resource from the first set (step 702).

If the result of step 701 is NO, then the UE 1 (MAC layer 206) selects a random access resource from a second set of random access resources associated with a feature subset included in the selected feature combination (step 703). The feature subset may be referred to as a subset of features, a feature subcombination, or a subcombination of features. The feature subset includes one or more features. For example, if the selected feature combination is SDT+Slicing, the feature subset can be SDT or Slicing. If the selected feature combination is RedCap+SDT+Slicing, the feature subset can be RedCap, RedCap+SDT, or RedCap+Slicing. The feature subset may be one or more features supported (or executable) in the cell 21. The UE 1 may select a feature subset that should be prioritized, or it may select a feature subset that is more necessary (or important). For example, if the feature combination includes RedCap and one or more other features, the UE 1 may ensure that RedCap is included in the feature subset.

In step 704, the MAC layer 206 of the UE 1 performs random access preamble transmission using the selected random access resource. Specifically, the MAC layer 206 of the UE 1 requests the PHY layer 207 to transmit a random access preamble (RACH preamble) on the selected RACH resource.

When performing the fallback operations of steps 703 and 704, the AS layer 208 of the UE 1 may notify the NAS layer 202 of a random access failure corresponding to the originally intended feature combination or of a fallback to a feature subset. Additionally or alternatively, if no feature subset is also available in step 703, the AS layer 208 may notify the NAS layer 202 of a random access failure corresponding to the originally intended feature or feature combination. In this case, the AS layer 208 may notify the NAS layer 202 of a failure of the (most) prioritized feature in the feature combination. Alternatively, the AS layer 208 may notify the NAS layer 202 of a failure with respect to a feature for which the AS layer 208 is not permitted to determine whether the feature (or its functionality) needs to be executed or whether it can be executed.

According to the operation of the UE 1 described with reference to Fig. 7, if the cell 21 does not provide a RACH resource set associated with a feature combination selected, desired, or intended by the UE 1, the UE 1 selects a RACH resource for random access to the cell 21 from an alternative RACH resource set that is associated with a feature subset included in that feature combination and is provided by the cell 21. This operation of the UE 1 allows the cell 21 or the RAN node 2 to provide only multiple RACH resource sets for only a portion of all possible feature combinations. Accordingly, the cell 21 does not necessarily have to provide all RACH resource sets for all possible feature combinations. This can help reduce fragmentation of random access resources.

### Fourth Example Embodiment

The example configuration of a radio communication system in this example embodiment may be similar to the example shown in Fig. 1. The control plane protocol stack of the UE 1 may be similar to the example shown in Fig. 2.

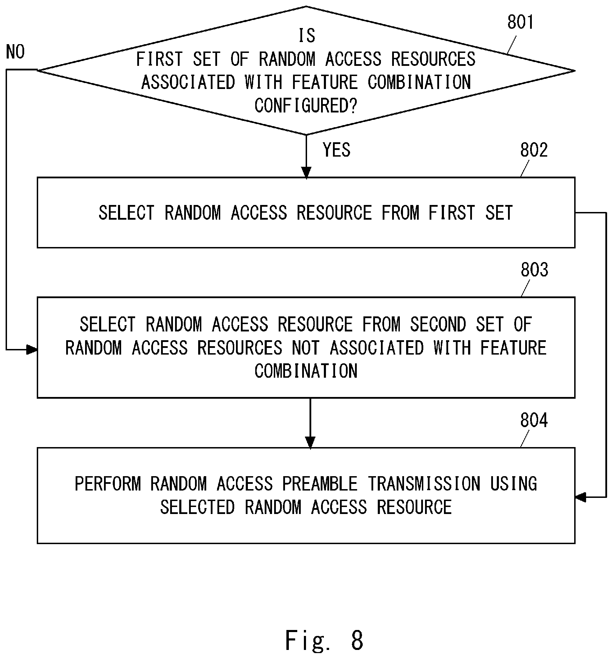

Fig. 8 shows an example of the operation of the UE 1 in a random access procedure. Steps 801-803 relate to random access resource selection. For example, the UE 1 may perform steps 801-803 instead of step 303 in Fig. 3, step 405 in Fig. 4, step 502 in Fig. 5, or step 606 in Fig. 6.

In step 801, the UE 1 (MAC layer 206) determines whether or not a first set of random access resources associated with a feature combination selected, desired, or intended by the UE 1 is configured (or available). The RRC layer 203 may configure the MAC layer 206 with multiple resource sets (or resource partitions), including the first set. The RRC layer 203 receives a random access configuration via broadcast from the RAN node 2, and configures the MAC layer 206 with the multiple resource sets (or resource partitions) indicated in the random access configuration.

Accordingly, if the result of step 801 is YES, it means that the RAN node 2 provides in the cell 21 the random access resource set (or resource partition) associated with the feature combination selected, desired, or intended by the UE 1. In other words, YES in step 801 means that the feature combination selected, desired, or intended by the UE 1 is supported (or available) in the cell 21. Conversely, if the result of step 801 is NO, it means that the RAN node 2 does not provide in the cell 21 the random access resource set (or resource partition) associated with the feature combination selected, desired, or intended by the UE 1. In other words, NO in step 801 means that the feature combination selected, desired, or intended by UE 1 is not supported (or available) in the cell 21.

The UE 1 (MAC layer 206) may choose between NUL and SUL carriers prior to the random access resource selection. An SUL carrier can be configured as a complement to an NUL carrier. To supplement the coverage of an NUL carrier, an SUL carrier typically uses a lower uplink frequency than the NUL carrier. The UE 1 (MAC layer 206) may select one of the NUL and SUL carriers based on a downlink measurement result. For example, the UE 1 may operate similarly to the selection between NUL and SUL carriers in 3GPP Release 15 and/or Release 16. If the RSRP of the downlink pathloss reference is lower than an RSRP threshold for uplink carrier selection (e.g., rsrp-ThresholdSSB-SUL), the UE 1 may select the SUL carrier to perform the random access procedure. Otherwise, the UE 1 may select the NUL carrier to perform the random access procedure.

The network (e.g., RAN node 2) may not necessarily support the same features or the same feature combinations on both the NUL and SUL carriers. Thus, in step 801, the UE 1 (MAC layer 206) may determine whether or not the first set of random access resources associated with the feature combination selected, desired, or intended by the UE 1 is available on the selected uplink carrier. In this case, if the result of step 801 is YES, it means that the feature combination selected, desired, or intended by the UE 1 is supported (or available) on the selected uplink carrier. If the result of step 801 is NO, it means that the feature combination selected, desired, or intended by the UE 1 is not supported (or available) on the selected uplink carrier.

If the result of step 801 is YES, then the UE 1 (MAC layer 206) selects a random access resource from the first set (step 1102).

If the result of step 801 is NO, then the UE 1 (MAC layer 206) selects a random access resource from a second set of random access resources not associated with the feature combination (step 803). For example, the UE 1 may perform the random access resource selection in the same manner as the 3GPP Release 15 and/or Release 16 random access procedure.

In step 804, the MAC layer 206 of the UE 1 performs random access preamble transmission using the selected random access resource. Specifically, the MAC layer 206 of the UE 1 requests the PHY layer 207 to transmit a random access preamble (RACH preamble) on the selected RACH resource.

When performing the fallback operations of steps 803 and 804, the AS layer 208 of the UE 1 may notify the NAS layer 202 of a random access failure corresponding to the originally intended feature combination or of a fallback to a random access not considering the feature combination.

According to the operation of the UE 1 described with reference to Fig. 8, if the cell 21 does not provide a RACH resource set associated with a feature combination selected, desired, or intended by the UE 1, the UE 1 selects a RACH resource for random access to the cell 21 from an alternative RACH resource set that is not associated with that feature combination. This operation of the UE 1 allows the cell 21 or the RAN node 2 to provide only multiple RACH resource sets for only a portion of all possible features and feature combinations. Accordingly, the cell 21 does not necessarily have to provide all RACH resource sets for all possible features and feature combinations. This can help reduce fragmentation of random access resources.

### Fifth Example Embodiment

The example configuration of a radio communication system in this example embodiment may be similar to the example shown in Fig. 1. The control plane protocol stack of the UE 1 may be similar to the example shown in Fig. 2.

This example embodiment relates to the handling of features and feature combinations selected, desired, or intended by the UE 1. The features can be divided into at least two types. In the first type, the MAC layer 206 of the UE 1 determines whether or not the feature needs to be executed (or whether or not the feature can be executed) based on information or conditions that it possesses. Additionally or alternatively, the MAC layer 206 may make the above determination based on information received from or specified by the upper layers (e.g., RRC layer 203) of the UE 1. For this type, if the MAC layer 206 of the UE 1 determines that at least one feature of the selected, desired, or intended feature combination does not need to be (or cannot be) performed, the MAC layer 206 may change the content of the feature combination (i.e., the included features) and select a RACH resource for the remaining features or feature combinations except for that feature. In other words, the MAC layer 206 may select a feature subset that excludes a feature that does not need to be (or cannot be) performed. In this case, the MAC layer 206 may communicate the decision results (e.g., information regarding the feature combination subject to be performed, information regarding the feature(s) to be excluded) to the RRC layer 203.

The second type is one in which the MAC layer 206 of the UE 1 does not or should not determine whether or not the feature needs to be executed (or whether or not the feature can be executed). In this type, the RRC layer 203 of the UE 1 determines whether or not the feature needs to be performed (or whether or not the feature can be performed) and informs the MAC layer 206 of the necessary information. The determination by the RRC layer 203 may be based on one or both of the capability of the UE 1 (UE capability) and predetermined information possessed by the RRC layer 203. Additionally or alternatively, the RRC layer 203 may make the above determination based on information received from or specified by a further higher layer (e.g., the NAS layer 202) of the UE 1. The MAC layer 206 selects a RACH resource corresponding to that feature or a feature combination including that feature. If the MAC layer 206 determines that there is no RACH resource corresponding to that feature, it may report a failure indication to the RRC layer 203 regarding the RACH resource selection. On the other hand, if the MAC layer 206 determines that there is no RACH resource corresponding to a feature combination including that second type of feature, the MAC layer 206 may exclude any one or more features of the first type from the feature combination and select a RACH resource corresponding to a feature subset including that second type of feature and the remainder of the features of the first type. Alternatively, the MAC layer 206 may select a RACH resource corresponding to only the second type of feature. In other words, when a feature subset needs to be selected from the feature combination, the MAC layer 206 may ensure that the feature subset includes one or more second type features (e.g., RedCap) that are included in the feature combination. The MAC layer 206 may then adjust the number of features in the feature subset depending on whether or not the first type features included in the feature combination are to be included in the feature subset.

The feature combination selected, desired, or intended by the UE 1 may include only one of the above two types or both of the two types. If the feature combination includes both of the two types, the MAC layer 206 may preferentially consider the second type of features. For example, the MAC layer 206 may preferentially perform the second type of features. The MAC layer 206 may preferentially select a RACH resource corresponding to the second type of features.

### Sixth Example Embodiment

The example configuration of a radio communication system in this example embodiment may be similar to the example shown in Fig. 1. The control plane protocol stack of the UE 1 may be similar to the example shown in Fig. 2.

In this example embodiment, during cell selection or reselection, or both, the UE 1 considers whether a candidate cell provides a separate set of random access resources for a feature or feature combination selected, desired, or intended by the UE 1. The feature can be any Release 17 feature. The feature combination can be a combination of Release 17 features. The feature may be RedCap, SDT, CovEnh, or Slicing. The feature combination can include at least two of RedCap, SDT, CovEnh, or Slicing. Random access based on Release 17 features or feature combinations allows the UE 1 to provide the network with an early indication of the Release 17 features or feature combinations via the random access resources used for preamble transmission.

The UE 1 (RRC layer 203) may consider a cell or frequency band that provides a separate preamble resource set for the feature or the feature combination to have a higher priority in selecting a cell to camp on than a cell or frequency band that does not provide that separate preamble resource set. According to this operation, the UE 1 can preferentially select as a cell to camp on a cell that provides a separate set of random access resources for the selected, desired, or intended feature or feature combination.

Specifically, the UE 1 may proceed as follows in intra-frequency or intra-frequency band cell (re)selection. If the highest ranked cell in terms of reception quality in a first frequency band does not provide the separate set and the second highest ranked cell in the first frequency band does provide the separate set, then the UE 1 (RRC layer 203) selects the second highest ranked cell as the cell to camp on.

Additionally or alternatively, the UE 1 may proceed as follows in inter-frequency or inter-frequency band cell (re)selection. If the highest ranked cell in terms of reception quality in a first frequency band does not provide the separate set and the highest ranked cell in terms of reception quality in a second frequency band provides the separate set, then the UE 1 (RRC layer 203) selects the highest ranked cell in the second frequency band as the cell to camp on. Alternatively, if the first frequency band does not support provision of the separate set and the second frequency band supports provision of the separate set, then the UE 1 (RRC layer 203) selects a cell in the second frequency band as the cell to camp on. Note that the first and second frequency bands may have the same priority (equal priority). Alternatively, the first frequency band may have a higher priority than the second frequency band.

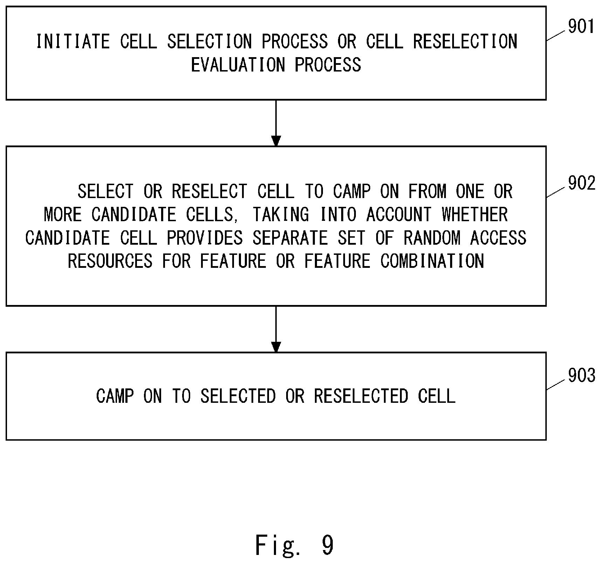

Fig. 9 shows an example of the operation of the UE 1 in cell selection or cell reselection or both. In step 901, the UE 1 (RRC layer 203) initiates a cell selection process or a cell reselection evaluation process. The cell selection process is initiated, for example, when a new PLMN or Stand-alone Non-Public Network (SNPN) is newly selected. The cell reselection evaluation process allows the UE 1 in RRC_IDLE or RRC_INACTIVE to select a more suitable cell. When the UE 1 is in Camped Normally state, the UE 1 attempts to detect, synchronize, and monitor intra-frequency, inter-frequency, and inter-RAT cells indicated by the serving cell (e.g., cell 21).

In step 902, the UE 1 (RRC layer 203) selects or reselects a cell to camp on from one or more candidate cells, taking into account whether or not a candidate cell provides a separate set of random access resources for a feature or feature combination. As described above, the UE 1 (RRC layer 203) may consider a cell or frequency band that provides a separate set of preamble resources for the feature or feature combination to have a higher priority in selecting a cell to camp on than a cell or frequency band that does not provide such a separate set of preamble resources. In step 903, the UE 1 camps on the selected or reselected cell. The UE 1 may receive system information (e.g., SIB1) broadcast in a candidate cell for cell (re)selection and determine, based on the received system information, whether the candidate cell provides a separate set of random access resources for the feature or feature combination. Additionally or alternatively, system information (e.g., SIB1) broadcast in the current cell (serving cell) may indicate whether these are provided in a neighboring cell, and the UE 1 may make a decision based on this.

According to the cell selection or reselection described in this example embodiment, the availability of random access based on Release 17 features or feature combinations is considered (or preferred) for cell selection or reselection. This allows the UE 1 to preferentially select a cell that supports random access based on the Release 17 feature or feature combination in cell selection and cell reselection.

As described in the fifth example embodiment, the feature combination selected, desired, or intended by the UE 1 may include only one of the above two types or both of the two types. If the feature combination includes both of the two types, the UE 1 (RRC layer 203) may preferentially consider the second type of features in the cell selection or reselection. For example, the RRC layer 203 may consider a cell or frequency band for which a feature (or feature subset) of the second type is available to have a higher priority in selecting a cell to camp on than a cell or frequency band for which it is not available. According to this behavior, the UE 1 can preferentially select a cell for which a feature (or feature subset) of the second type is available as a cell to camp on. Alternatively, the RRC layer 203 may consider a cell or frequency band that provides a separate set of preamble resources for a feature (or feature subset) of the second type to have a higher priority in selecting a cell to camp on than a cell or frequency band that does not provide it. According to this behavior, the UE 1 can preferentially select a cell that provides a separate set of preamble resources for a feature (or feature subset) of the second type as a cell to camp on.

### Seventh Example Embodiment

The example configuration of a radio communication system in this example embodiment may be similar to the example shown in Fig. 1. The control plane protocol stack of the UE 1 may be similar to the example shown in Fig. 2.

The 3GPP RAN Working Group is considering enhancements to cell selection and reselection for slicing. This functionality will also be introduced in 3GPP Release 17 (see, for example, Non-Patent Literature 5-8). This feature is also referred to as slice-based (or slice-group-based) cell (re)selection. This example embodiment provides a solution for integrating slice-based (or slice-group-based) cell (re)selection with cell (re)selection that prioritizes the availability of random access based on Release 17 features or feature combinations described in the fifth example embodiment.

In this example embodiment, the UE 1 (RRC layer 203) considers a cell that supports an intended network slice and provides a separate set of random access resources for Release 17 features or feature combinations to have a higher priority in selecting a cell to camp on than a cell that does not support that network slice or does not provide that separate set. The intended network slice is a network slice intended by the NAS layer 202 of the UE 1. The intended network slice may be specified by an S-NSSAI. The intended network slice may be an S-NSSAI included in a Configured NSSAI or an S-NSSAI included in an Allowed NSSAI. The NAS layer 202 may indicate an intended network slice group to the RRC layer 203. The intended network slice group may be specified by a slice group ID. The mapping of the network slice group to one or more network slices may be provided by the core network (e.g., AMF) to the UE 1 (NAS layer 202) via NAS signaling. Alternatively, the NAS layer 202 may indicate an intended network slice priority level to the RRC layer 203. The mapping between the slice priority level and one or more network slices may be provided by the core network (e.g., AMF) to the UE 1 (NAS layer 202) via NAS signaling.

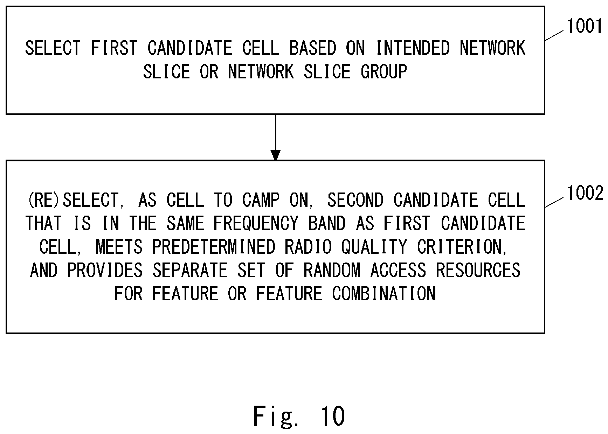

In one implementation, the AS layer 208 may select the most suitable cell through a slice-based (or slice-group-based) cell (re)selection process, and then perform a cell (re)selection process to prioritize the availability of random access based on Release 17 features or feature combinations. For example, this can be done as shown in Fig. 10.

In step 1001, the AS layer 208 performs a slice-based (or slice-group-based) cell (re)selection process. Specifically, the RRC layer 203 selects a first candidate cell based on a network slice or network slice group intended by the NAS layer 202. As described above, an intended network slice priority level may be considered instead of the intended network slice group.

For example, the selection of the first cell by the AS layer 208 may be performed as follows:
- Step 1: Sort the slices in order of priority, starting with the slice with the highest priority.
- Step 2: Select a slice from the sorted slice list in order of priority.
- Step 3: For the selected slice, assign priorities to frequencies or frequency bands. The priority of the frequencies or frequency bands is configured by the network (e.g., RAN node 2 or AMF).
- Step 4: Starting from the highest priority frequency (band), perform downlink measurements similar to those in Release 15 and Release 16.
- Step 5: If the highest ranked cell is suitable in terms of radio quality and supports the slice selected in step 2, select it as the first cell and exit the sequence.
- Step 6: If there are remaining frequencies, return to step 4.
- Step 7: If the end of the slice list is not reached, return to step 2.
- Step 8: Perform legacy cell reselection, i.e., cell reselection similar to that of Release 15 and Release 16.

Then, in step 1002, the RRC layer 203 performs a cell (re)selection process to prioritize the availability of random access based on Release 17 features or feature combinations. If the first cell has been selected according to the sequence described in the immediately preceding paragraph, the RRC layer 203 may perform step 1002 after completing that sequence in step 5.

Specifically, the RRC layer 203 may select a second candidate cell that is in the same frequency band as the first candidate cell selected in step 1001, meets a predetermined radio quality criterion, and provides a separate set of random access resources for a feature or feature combination, as the cell to camp on. In an example, the predetermined radio quality criterion is that a downlink quality metric of the first candidate cell (e.g., RSRP, RSRQ, Srxlev, Squal) minus a downlink quality metric of the second candidate cell is less than (or equal to or less than) a threshold. In other words, the predetermined radio quality criterion is that the downlink quality metric of the second candidate cell is greater than (or equal to or greater than) the downlink quality metric of the first candidate cell minus a threshold. The threshold may be predetermined or configured by the network (e.g., RAN node 2).

In another implementation, the AS layer 208 may perform, concurrently with (or in parallel with) the slice-based (or slice-group-based) cell (re)selection process, a cell (re)selection process to prioritize the availability of random access based on Release 17 features or feature combinations. For example, this can be done during step 5 of the slice-based (or slice-group-based) cell (re)selection sequence described above. For example, if there are a plurality of candidate cells in which the highest priority slice is available, the AS layer 208 (RRC layer 203) may prioritize one or more candidate cells that provide a separate set of random access resources for a feature or feature combination.

In still another implementation, the AS layer 208 selects a suitable cell through a cell (re)selection process to prioritize the availability of random access based on Release 17 features or feature combinations, and then performs a slice-based (or slice-group-based) cell (re)selection. For example, the AS layer 208 may preferentially select cells in which random access based on Release 17 features or feature combinations is available as candidate cells, and then perform slice-based (or slice-group-based) cell (re)selection.

As described in the fifth example embodiment, the feature combination selected, desired, or intended by the UE 1 may include only one of the above two types or both of the two types. If the feature combination includes both of the two types, the UE 1 (RRC layer 203) may preferentially consider the second type of features in the cell selection or reselection. For example, the RRC layer 203 may consider a cell or frequency band for which a feature (or feature subset) of the second type is available to have a higher priority in selecting a cell to camp on than a cell or frequency band for which it is not available. According to this behavior, the UE 1 can preferentially select a cell for which a feature (or feature subset) of the second type is available as a cell to camp on. Alternatively, the RRC layer 203 may consider a cell or frequency band that provides a separate set of preamble resources for a feature (or feature subset) of the second type to have a higher priority in selecting a cell to camp on than a cell or frequency band that does not provide it. According to this behavior, the UE 1 can preferentially select a cell that provides a separate set of preamble resources for a feature (or feature subset) of the second type as a cell to camp on.

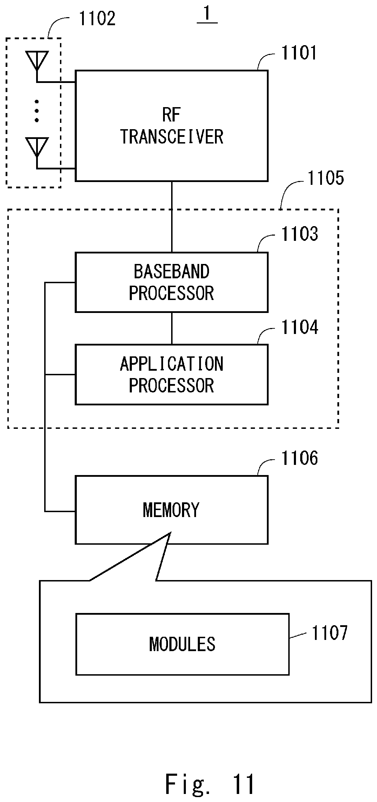

The following provides configuration examples of the UE 1 and the RAN node 2 according to the above described example embodiments. Fig. 11 is a block diagram showing an example configuration of the UE 1. The radio frequency (RF) transceiver 1101 performs analog RF signal processing to communicate with a RAN node. The RF transceiver 1101 may include a plurality of transceivers. The analog RF signal processing performed by the RF transceiver 1101 includes frequency up-conversion, frequency down-conversion, and amplification. The RF transceiver 1101 is coupled to the antenna array 1102 and the baseband processor 1103. The RF transceiver 1101 receives modulation symbol data (or OFDM symbol data) from the baseband processor 1103, generates a transmission RF signal, and supplies the transmission RF signal to the antenna array 1102. The RF transceiver 1101 generates a baseband reception signal based on the reception RF signal received by the antenna array 1102 and supplies the baseband reception signal to the baseband processor 1103. The RF transceiver 1101 may include an analog beamformer circuit for beamforming. The analog beamformer circuit includes, for example, a plurality of phase shifters and a plurality of power amplifiers.

The baseband processor 1103 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). On the other hand, the control-plane processing includes communication management of layer 1 (e.g., transmission power control), layer 2 (e.g., radio resource management, and hybrid automatic repeat request (HARQ) processing), and layer 3 (e.g., signaling regarding attachment, mobility, and call management).

For example, the digital baseband signal processing performed by the baseband processor 1103 may include signal processing in the Service Data Adaptation Protocol (SDAP) layer, Packet Data Convergence Protocol (PDCP) layer, Radio Link Control (RLC) layer, Medium Access Control (MAC) layer, and Physical (PHY) layer. The control-plane processing performed by the baseband processor 1103 may also include processing of Non-Access Stratum (NAS) protocols, Radio Resource Control (RRC) protocols, MAC Control Elements (CEs), and Downlink Control Information (DCIs).

The baseband processor 1103 may perform Multiple Input Multiple Output (MIMO) encoding and precoding for beamforming.

The baseband processor 1103 may include a modem processor (e.g., Digital Signal Processor (DSP)) that performs the digital baseband signal processing and a protocol stack processor (e.g., Central Processing Unit (CPU) or Micro Processing Unit (MPU)) that performs the control-plane processing. In this case, the protocol stack processor performing the control-plane processing may be integrated with an application processor 1104 described later.

The application processor 1104 may also be referred to as a CPU, an MPU, a microprocessor, or a processor core. The application processor 1104 may include a plurality of processors (processor cores). The application processor 1104 loads a system software program (Operating System (OS)) and various application programs (e.g., a voice call application, a web browser, a mailer, a camera operation application, a music player application) from a memory 1106 or from another memory (not shown) and executes these programs, thereby providing various functions of the UE 1.

In some implementations, as represented by the dashed line (1105) in Fig. 11, the baseband processor 1103 and the application processor 1104 may be integrated on a single chip. In other words, the baseband processor 1103 and the application processor 1104 may be implemented in a single System on Chip (SoC) device 1105. A SoC device may be referred to as a system Large Scale Integration (LSI) or a chipset.

The memory 1106 is a volatile memory or a non-volatile memory, or a combination thereof. The memory 1106 may include a plurality of physically independent memory devices. The volatile memory is, for example, Static Random Access Memory (SRAM), Dynamic RAM (DRAM), or a combination thereof. The non-volatile memory may be a Mask Read Only Memory (MROM), an Electrically Erasable Programmable ROM (EEPROM), a flash memory, a hard disk drive, or any combination thereof. The memory 1106 may include, for example, an external memory device that can be accessed by the baseband processor 1103, the application processor 1104, or the SoC 1105. The memory 1106 may include an internal memory device that is integrated into the baseband processor 1103, the application processor 1104, or the SoC 1105. Further, the memory 1106 may include a memory in a Universal Integrated Circuit Card (UICC).

The memory 1106 may store one or more software modules (computer programs) 1107 including instructions and data for processing by the UE 1 described in the above example embodiments. In some implementations, the baseband processor 1103 or the application processor 1104 may load the software module(s) 1107 from the memory 1106 and execute the loaded software module(s) 1107, thereby performing the processing of the UE 1 described in the above example embodiments with reference to the drawings.

The control-plane processing and operations performed by the UE 1 described in the above embodiments can be achieved by elements other than the RF transceiver 1101 and the antenna array 1102, i.e., achieved by the memory 1106, which stores the software modules 1107, and one or both of the baseband processor 1103 and the application processor 1104.

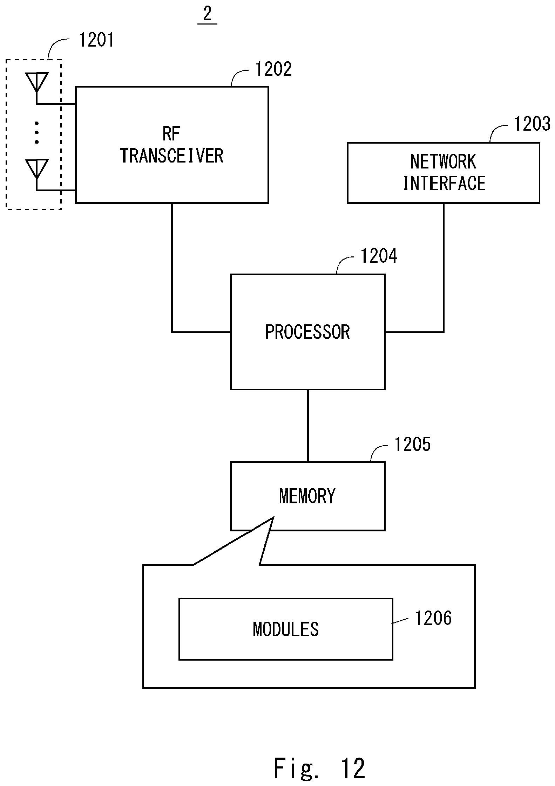

Fig. 12 is a block diagram showing an example configuration of the RAN node 2 according to the above example embodiments. Referring to Fig. 12, the RAN node 2 includes a Radio Frequency transceiver 1201, a network interface 1203, a processor 1204, and a memory 1205. The RF transceiver 1201 performs analog RF signal processing to communicate with UEs including the UE 1. The RF transceiver 1201 may include a plurality of transceivers. The RF transceiver 1201 is coupled to an antenna array 1202 and the processor 1204. The RF transceiver 1201 receives modulated symbol data from the processor 1204, generates a transmission RF signal, and supplies the transmission RF signal to the antenna array 1202. Further, the RF transceiver 1201 generates a baseband reception signal based on a reception RF signal received by the antenna array 1202 and supplies the baseband reception signal to the processor 1204. The RF transceiver 1201 may include an analog beamformer circuit for beam forming. The analog beamformer circuit includes, for example, a plurality of phase shifters and a plurality of power amplifiers.

The network interface 1203 is used to communicate with network nodes (e.g., SN 2, and control and transfer nodes in the core network). The network interface 1203 may include, for example, a network interface card (NIC) conforming to the IEEE 802.3 series.

The processor 1204 performs digital baseband signal processing (i.e., data-plane processing) and control-plane processing for radio communication. The processor 1204 may include a plurality of processors. The processor 1204 may include, for example, a modem processor (e.g., Digital Signal Processor (DSP)) that performs digital baseband signal processing and a protocol stack processor (e.g., Central Processing Unit (CPU) or Micro Processing Unit (MPU) that performs the control-plane processing. The processor 1204 may include a digital beamformer module for beam forming. The digital beamformer module may include a Multiple Input Multiple Output (MIMO) encoder and a precoder.

The memory 1205 is composed of a combination of a volatile memory and a non-volatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disk drive, or any combination thereof. The memory 1205 may include a storage located that is separate from the processor 1204. In this case, the processor 1204 may access the memory 1205 through the network interface 1203 or an I/O interface not shown.

The memory 1205 may store one or more software modules (computer programs) 1206 including instructions and data for performing the processing of the RAN node 2 described in the above example embodiments. In some implementations, the processor 1204 may be configured to load these software modules 1206 from the memory 1205 and execute the loaded software modules, thereby performing the processing of the RAN node 2 described in the above example embodiments.

If the RAN node 2 is a CU (e.g., gNB-CU) or CU-CP (e.g., gNB-CU-CP), the RAN node 2 does not need to include the RF transceiver 1201 (and antenna array 1202).

As described using Figs. 11 and 12, each of the processors in the UE 1 and RAN node 2 according to the example embodiments described above can execute one or more programs, containing a set of instructions, for causing a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, but not limitation, transitory computer readable media or communication media can include electrical, optical, acoustical, or other form of propagated signals.

### Other Example Embodiments

The "features" in the example embodiments described above may be new features to be introduced in future 3GPP Release 18 or later. Similarly, the "feature combinations" in the example embodiments described above may include new features to be introduced in future 3GPP Release 18 or later. For example, in addition to Mobile Originated (MO) SDT to be introduced in Release 17, Mobile Terminated (MT) SDT will also be introduced in 3GPP Release 18. In an implementation, the MT-SDT feature may be distinguished from the MO-SDT feature, and a separate RACH resource set (or partition, or pool) may be configured for the MT-SDT feature. In this case, a feature combination may include MT-SDT. The RAN node 2 may inform the UE 1 via broadcast (e.g., SIB) or dedicated RRC signaling whether or not MO-SDT is distinguished from MT-SDT in the RACH resource partitioning. Specifically, a random access configuration (e.g., RACH-Config) sent by the RAN node 2 to the UE 1 may include a 1-bit flag (e.g., "mt-SDT") as an optional element. If the random access configuration includes this flag, the UE 1 may use the RACH resource set for the (MO-)SDT feature also for MT-SDT. Conversely, if the random access configuration does not include this flag, the UE 1 checks whether a separate RACH resource set (or partition, or pool) is configured for MT-SDT and, if so, uses the separate RACH resource set for MT-SDT. If the flag is not included in the random access configuration and no separate RACH resource set is configured for MT-SDT, the UE 1 may understand that MT-SDT is not supported. In this case, if the UE 1 triggers MT-SDT, the UE 1 may use the RACH resource set for the (MO-)SDT feature also for MT-SDT, or use a RACH resource set similar to that of Release 15 and/or Release 16 also for MT-SDT.

In the example embodiments described above, if a configuration (e.g., Random Access Configuration) received via RRC signaling (e.g., SIB) contains a configuration, information, or field related to a feature (e.g., Release 17 feature) that the UE 1 does not support, the UE 1 may act to not ignore the values (or code points) in that configuration, information, or field.

For example, the UE 1 may recognize the size of a RACH resource set (or partition) for its desired feature or feature combination based on the value of the first ra-PreambleStartIndex field for the feature or feature combination it desires and the value of the second ra-PreambleStartIndex field for another feature or feature combination immediately following it. In this case, whether or not the UE 1 supports the feature or feature combination associated with the second ra-PreambleStartIndex field, it should not ignore the value of the second ra-PreambleStartIndex field.

In some of the above example embodiments, the UE 1 may perform a different operation (or process) for a particular feature or a feature combination including it than in the above example embodiments. For example, with respect to uplink carrier selection, the uplink carrier (e.g., NUL carrier) to be selected may be predetermined (or specified in the standard) for a particular feature (e.g., RedCap) or feature combination including it. This is useful to take full advantage of the feature's functionality or to account for any limitations in the feature's functionality.

In some of the above example embodiments, the UE 1 may perform a different operation (or process) for a particular feature or a feature combination including it than in the above example embodiments. For example, with respect to a particular feature (e.g., coverage enhancement), after uplink carrier selection, the UE 1 may decide whether or not the feature is needed (or whether or not to perform the feature). This is useful in cases where the functionality of the feature depends on the result of the uplink carrier selection.

The above-described example embodiments are merely examples of applications of the technical ideas obtained by the inventor. These technical ideas are not limited to the above-described example embodiments and various modifications can be made thereto.

For example, the whole or part of the example embodiments disclosed above can be described as, but not limited to, the following supplementary notes.

### (Supplementary Note 1)

A radio terminal comprising:
at least one memory; and
at least one processor coupled to the at least one memory and configured to provide Non-Access Stratum (NAS) layer functionality and Access Stratum (AS) layer functionality, wherein
the NAS layer functionality is configured to pass information about a first feature to the AS layer functionality, and
the AS layer functionality is configured to:
   determine a feature combination, the feature combination including the first feature derived from the information and one or more other features;
   select a random access resource from a first set of random access resources associated with the feature combination determined by the AS layer functionality; and
   perform a random access preamble transmission with the selected random access resource.

### (Supplementary Note 2)

The radio terminal according to Supplementary Note 1, wherein the first feature is slicing, and
the one or more other features include at least one of Reduced Capability (RedCap), Small Data Transmission (SDT), or Coverage Enhancement (CovEnh).

### (Supplementary Note 3)

The radio terminal according to Supplementary Note 1 or 2, wherein the information about the first feature indicates one or more network slices, one or more network slice groups, or one or more network slice priority levels intended by the NAS layer functionality.

### (Supplementary Note 4)

The radio terminal according to Supplementary Note 3, wherein the information about the first feature indicates one or more Single Network Slice Selection Assistance Information (S-NSSAI) for specifying the intended one or more network slices.

### (Supplementary Note 5)

The radio terminal according to any one of Supplementary Notes 1 to 4, wherein the AS layer functionality is configured to inform the NAS layer of a failure when the first set is unavailable in a serving cell, without performing a random access preamble transmission.

### (Supplementary Note 6)

The radio terminal according to any one of Supplementary Notes 1 to 4, wherein the AS layer functionality is configured to:
when the first set is unavailable in a serving cell, select a random access resource from a second set of random access resources associated with a feature subset included in the feature combination; and
perform a random access preamble transmission with the random access resource selected from the second set.

### (Supplementary Note 7)

The radio terminal according to any one of Supplementary Notes 1 to 4, wherein the AS layer functionality is configured to:
when the first set is unavailable in a serving cell, select a random access resource from a third set of random access resources not associated with the feature combination; and
perform a random access preamble transmission with the random access resource selected from the third set.

### (Supplementary Note 8)

A method performed by a radio terminal, the method comprising:
providing Non-Access Stratum (NAS) layer functionality and Access Stratum (AS) layer functionality;
passing, by the NAS layer functionality, information about a first feature to the AS layer functionality;
determining, by the AS layer functionality, a feature combination, the feature combination including the first feature derived from the information and one or more other features;
selecting, by the AS layer functionality, a random access resource from a first set of random access resources associated with the feature combination determined by the AS layer functionality; and
performing, by the AS layer functionality, a random access preamble transmission with the selected random access resource.

### (Supplementary Note 9)

A program for causing a computer to perform a method for a radio terminal, the method comprising:
providing Non-Access Stratum (NAS) layer functionality and Access Stratum (AS) layer functionality;
passing, by the NAS layer functionality, information about a first feature to the AS layer functionality;
determining, by the AS layer functionality, a feature combination, the feature combination including the first feature derived from the information and one or more other features;
selecting, by the AS layer functionality, a random access resource from a first set of random access resources associated with the feature combination determined by the AS layer functionality; and
performing, by the AS layer functionality, a random access preamble transmission with the selected random access resource.

### (Supplementary Note 10)

A radio terminal comprising:
at least one memory; and
at least one processor coupled to the at least one memory and configured to provide Non-Access Stratum (NAS) layer functionality and Access Stratum (AS) layer functionality, wherein
the NAS layer functionality is configured to pass information indicating a feature combination to the AS layer functionality, and
the AS layer functionality is configured to:
   select a random access resource from a first set of random access resources associated with the feature combination indicated by the NAS layer functionality; and
   perform a random access preamble transmission with the selected random access resource.

### (Supplementary Note 11)

The radio terminal according to Supplementary Note 10, wherein the feature combination includes slicing and one or more other features.

### (Supplementary Note 12)

The radio terminal according to Supplementary Note 11, wherein the one or more other features include at least one of Reduced Capability (RedCap), Small Data Transmission (SDT), or Coverage Enhancement (CovEnh).

### (Supplementary Note 13)

The radio terminal according to Supplementary Note 11 or 12, wherein the one or more other features include at least Small Data Transmission (SDT).

### (Supplementary Note 14)

The radio terminal according to any one of Supplementary Notes 10 to 13, wherein the information indicating the feature combination indicates one or more network slices intended by the NAS layer functionality.

### (Supplementary Note 15)

The radio terminal according to Supplementary Note 14, wherein the information indicating the feature combination includes one or more Single Network Slice Selection Assistance Information (S-NSSAI) for specifying the intended one or more network slices.

### (Supplementary Note 16)

The radio terminal according to any one of Supplementary Notes 10 to 15, wherein the AS layer functionality is configured to inform the NAS layer of a failure when the first set is unavailable in a serving cell, without performing a random access preamble transmission.

### (Supplementary Note 17)

The radio terminal according to any one of Supplementary Notes 10 to 15, wherein the AS layer functionality is configured to:
when the first set is unavailable in a serving cell, select a random access resource from a second set of random access resources associated with a feature subset included in the feature combination; and
perform a random access preamble transmission with the random access resource selected from the second set.

### (Supplementary Note 18)

The radio terminal according to any one of Supplementary Notes 10 to 15, wherein the AS layer functionality is configured to:
when the first set is unavailable in a serving cell, select a random access resource from a third set of random access resources not associated with the feature combination; and
perform a random access preamble transmission with the random access resource selected from the third set.

### (Supplementary Note 19)

A method performed by a radio terminal, the method comprising:
providing Non-Access Stratum (NAS) layer functionality and Access Stratum (AS) layer functionality;
passing, by the NAS layer functionality, information indicating a feature combination to the AS layer functionality;
selecting, by the AS layer functionality, a random access resource from a first set of random access resources associated with the feature combination indicated by the NAS layer functionality; and
performing, by the AS layer functionality, a random access preamble transmission with the selected random access resource.

### (Supplementary Note 20)

A program for causing a computer to perform a method for a radio terminal, the method comprising:
providing Non-Access Stratum (NAS) layer functionality and Access Stratum (AS) layer functionality;
passing, by the NAS layer functionality, information indicating a feature combination to the AS layer functionality;
selecting, by the AS layer functionality, a random access resource from a first set of random access resources associated with the feature combination indicated by the NAS layer functionality; and
performing, by the AS layer functionality, a random access preamble transmission with the selected random access resource.

### (Supplementary Note 21)

A radio terminal comprising:
at least one memory; and
at least one processor coupled to the at least one memory and configured to, in selecting or reselecting a cell to camp on from one or more candidate cells, consider whether a candidate cell provides a separate set of random access resources for a selected, desired, or intended feature or feature combination.

### (Supplementary Note 22)

The radio terminal according to Supplementary Note 21, wherein the at least one processor is configured to consider a cell or frequency band that provides the separate set to have a higher priority in selecting the cell to camp on than a cell or frequency band that does not provide the separate set.

### (Supplementary Note 23)

The radio terminal according to Supplementary Note 21 or 22, wherein the at least one processor is configured to select, if a highest ranked cell in terms of reception quality in a first frequency band does not provide the separate set and a second highest ranked cell in the first frequency band provides the separate set, the second highest ranked cell as the cell to camp on.

### (Supplementary Note 24)

The radio terminal according to Supplementary Note 21 or 22, wherein the at least one processor is configured to select, if a highest ranked cell in terms of reception quality in a first frequency band does not provide the separate set and a highest ranked cell in terms of reception quality in a second frequency band provides the separate set, the highest ranked cell in the second frequency band as the cell to camp on.

### (Supplementary Note 25)

The radio terminal according to Supplementary Note 21 or 22, wherein the at least one processor is configured to select, if a first frequency band does not support provision of the separate set and a second frequency band supports provision of the separate set, a cell in the second frequency band as the cell to camp on.

### (Supplementary Note 26)

The radio terminal according to any one of Supplementary Notes 21 to 25, wherein the at least one processor is configured to consider a cell that supports an intended network slice, network slice group, or network slice priority level and provides the separate set to have a higher priority in selecting the cell to camp on than a cell that does not support the intended network slice or network slice group or does not provide the separate set.

### (Supplementary Note 27)

The radio terminal according to any one of Supplementary Notes 21 to 26, wherein the at least one processor is configured to:
select a first candidate cell based on an intended network slice or network slice group; and
select a second candidate cell that is in a same frequency band as the first candidate cell, meets a predetermined radio quality criterion, and provides the separate set, as the cell to camp on.

### (Supplementary Note 28)

The radio terminal according to any one of Supplementary Notes 21 to 27, wherein
the feature is Reduced Capability (RedCap), Small Data Transmission (SDT), Coverage Enhancement (CovEnh), or slicing, and
the feature combination includes at least two of RedCap, SDT, CovEnh, or slicing.

### (Supplementary Note 29)

A method performed by a radio terminal, the method comprising:
in selecting or reselecting a cell to camp on from one or more candidate cells, considering whether a candidate cell provides a separate set of random access resources for a selected, desired, or intended feature or feature combination.

### (Supplementary Note 30)

A program for causing a computer to perform a method for a radio terminal, the method comprising:
in selecting or reselecting a cell to camp on from one or more candidate cells, considering whether a candidate cell provides a separate set of random access resources for a selected, desired, or intended feature or feature combination.

This application is based upon and claims the benefit of priority from Japanese Patent Application No. 2021-171921, filed on October 20, 2021, the disclosure of which is incorporated herein in its entirety by reference.

### Reference Signs List

- 1: UE
- 2, 3: RAN Node
- 21, 31: Cell
- 1103: Baseband Processor
- 1104: Application Processor
- 1106: Memory
- 1107: Modules
- 1204: Processor
- 1205: Memory
- 1206: Modules

## Claims

1. A radio terminal comprising:
at least one memory; and
at least one processor coupled to the at least one memory and configured to provide Non-Access Stratum (NAS) layer functionality and Access Stratum (AS) layer functionality, wherein
the NAS layer functionality is configured to pass information about a first feature to the AS layer functionality, and
the AS layer functionality is configured to:
determine a feature combination, the feature combination including the first feature derived from the information and one or more other features;
select a random access resource from a first set of random access resources associated with the feature combination determined by the AS layer functionality; and
perform a random access preamble transmission with the selected random access resource.

2. The radio terminal according to claim 1, wherein
the first feature is slicing, and
the one or more other features include at least one of Reduced Capability (RedCap), Small Data Transmission (SDT), or Coverage Enhancement (CovEnh).

3. The radio terminal according to claim 1 or 2, wherein the information about the first feature indicates one or more network slices, one or more network slice groups, or one or more network slice priority levels intended by the NAS layer functionality.

4. The radio terminal according to claim 3, wherein the information about the first feature indicates one or more Single Network Slice Selection Assistance Information (S-NSSAI) for specifying the intended one or more network slices.

5. The radio terminal according to any one of claims 1 to 4, wherein the AS layer functionality is configured to inform the NAS layer of a failure when the first set is unavailable in a serving cell, without performing a random access preamble transmission.

6. The radio terminal according to any one of claims 1 to 4, wherein the AS layer functionality is configured to:
when the first set is unavailable in a serving cell, select a random access resource from a second set of random access resources associated with a feature subset included in the feature combination; and
perform a random access preamble transmission with the random access resource selected from the second set.

7. The radio terminal according to any one of claims 1 to 4, wherein the AS layer functionality is configured to:
when the first set is unavailable in a serving cell, select a random access resource from a third set of random access resources not associated with the feature combination; and
perform a random access preamble transmission with the random access resource selected from the third set.

8. A method performed by a radio terminal, the method comprising:
providing Non-Access Stratum (NAS) layer functionality and Access Stratum (AS) layer functionality;
passing, by the NAS layer functionality, information about a first feature to the AS layer functionality;
determining, by the AS layer functionality, a feature combination, the feature combination including the first feature derived from the information and one or more other features;
selecting, by the AS layer functionality, a random access resource from a first set of random access resources associated with the feature combination determined by the AS layer functionality; and
performing, by the AS layer functionality, a random access preamble transmission with the selected random access resource.

9. A non-transitory computer-readable medium storing a program for causing a computer to perform a method for a radio terminal, the method comprising:
providing Non-Access Stratum (NAS) layer functionality and Access Stratum (AS) layer functionality;
passing, by the NAS layer functionality, information about a first feature to the AS layer functionality;
determining, by the AS layer functionality, a feature combination, the feature combination including the first feature derived from the information and one or more other features;
selecting, by the AS layer functionality, a random access resource from a first set of random access resources associated with the feature combination determined by the AS layer functionality; and
performing, by the AS layer functionality, a random access preamble transmission with the selected random access resource.

10. A radio terminal comprising:
at least one memory; and
at least one processor coupled to the at least one memory and configured to provide Non-Access Stratum (NAS) layer functionality and Access Stratum (AS) layer functionality, wherein
the NAS layer functionality is configured to pass information indicating a feature combination to the AS layer functionality, and
the AS layer functionality is configured to:
select a random access resource from a first set of random access resources associated with the feature combination indicated by the NAS layer functionality; and
perform a random access preamble transmission with the selected random access resource.

11. The radio terminal according to claim 10, wherein the feature combination includes slicing and one or more other features.

12. The radio terminal according to claim 11, wherein the one or more other features include at least one of Reduced Capability (RedCap), Small Data Transmission (SDT), or Coverage Enhancement (CovEnh).

13. The radio terminal according to claim 11 or 12, wherein the one or more other features include at least Small Data Transmission (SDT).

14. The radio terminal according to any one of claims 10 to 13, wherein the information indicating the feature combination indicates one or more network slices intended by the NAS layer functionality.

15. The radio terminal according to claim 14, wherein the information indicating the feature combination includes one or more Single Network Slice Selection Assistance Information (S-NSSAI) for specifying the intended one or more network slices.

16. The radio terminal according to any one of claims 10 to 15, wherein the AS layer functionality is configured to inform the NAS layer of a failure when the first set is unavailable in a serving cell, without performing a random access preamble transmission.

17. The radio terminal according to any one of claims 10 to 15, wherein the AS layer functionality is configured to:
when the first set is unavailable in a serving cell, select a random access resource from a second set of random access resources associated with a feature subset included in the feature combination; and
perform a random access preamble transmission with the random access resource selected from the second set.

18. The radio terminal according to any one of claims 10 to 15, wherein the AS layer functionality is configured to:
when the first set is unavailable in a serving cell, select a random access resource from a third set of random access resources not associated with the feature combination; and
perform a random access preamble transmission with the random access resource selected from the third set.

19. A method performed by a radio terminal, the method comprising:
providing Non-Access Stratum (NAS) layer functionality and Access Stratum (AS) layer functionality;
passing, by the NAS layer functionality, information indicating a feature combination to the AS layer functionality;
selecting, by the AS layer functionality, a random access resource from a first set of random access resources associated with the feature combination indicated by the NAS layer functionality; and
performing, by the AS layer functionality, a random access preamble transmission with the selected random access resource.

20. A non-transitory computer-readable medium storing a program for causing a computer to perform a method for a radio terminal, the method comprising:
providing Non-Access Stratum (NAS) layer functionality and Access Stratum (AS) layer functionality;
passing, by the NAS layer functionality, information indicating a feature combination to the AS layer functionality;
selecting, by the AS layer functionality, a random access resource from a first set of random access resources associated with the feature combination indicated by the NAS layer functionality; and
performing, by the AS layer functionality, a random access preamble transmission with the selected random access resource.

21. A radio terminal comprising:
at least one memory; and
at least one processor coupled to the at least one memory and configured to, in selecting or reselecting a cell to camp on from one or more candidate cells, consider whether a candidate cell provides a separate set of random access resources for a selected, desired, or intended feature or feature combination.

22. The radio terminal according to claim 21, wherein the at least one processor is configured to consider a cell or frequency band that provides the separate set to have a higher priority in selecting the cell to camp on than a cell or frequency band that does not provide the separate set.

23. The radio terminal according to claim 21 or 22, wherein the at least one processor is configured to select, if a highest ranked cell in terms of reception quality in a first frequency band does not provide the separate set and a second highest ranked cell in the first frequency band provides the separate set, the second highest ranked cell as the cell to camp on.

24. The radio terminal according to claim 21 or 22, wherein the at least one processor is configured to select, if a highest ranked cell in terms of reception quality in a first frequency band does not provide the separate set and a highest ranked cell in terms of reception quality in a second frequency band provides the separate set, the highest ranked cell in the second frequency band as the cell to camp on.

25. The radio terminal according to claim 21 or 22, wherein the at least one processor is configured to select, if a first frequency band does not support provision of the separate set and a second frequency band supports provision of the separate set, a cell in the second frequency band as the cell to camp on.

26. The radio terminal according to any one of claims 21 to 25, wherein the at least one processor is configured to consider a cell that supports an intended network slice, network slice group, or network slice priority level and provides the separate set to have a higher priority in selecting the cell to camp on than a cell that does not support the intended network slice or network slice group or does not provide the separate set.

27. The radio terminal according to any one of claims 21 to 26, wherein the at least one processor is configured to:
select a first candidate cell based on an intended network slice or network slice group; and
select a second candidate cell that is in a same frequency band as the first candidate cell, meets a predetermined radio quality criterion, and provides the separate set, as the cell to camp on.

28. The radio terminal according to any one of claims 21 to 27, wherein
the feature is Reduced Capability (RedCap), Small Data Transmission (SDT), Coverage Enhancement (CovEnh), or slicing, and
the feature combination includes at least two of RedCap, SDT, CovEnh, or slicing.

29. A method performed by a radio terminal, the method comprising:
in selecting or reselecting a cell to camp on from one or more candidate cells, considering whether a candidate cell provides a separate set of random access resources for a selected, desired, or intended feature or feature combination.

30. A non-transitory computer-readable medium storing a program for causing a computer to perform a method for a radio terminal, the method comprising:
in selecting or reselecting a cell to camp on from one or more candidate cells, considering whether a candidate cell provides a separate set of random access resources for a selected, desired, or intended feature or feature combination.
